(19) Europäisches Patentamt / European Patent Office / Office européen des brevets

(11) **EP 4 296 506 B1**

(12) **EUROPÄISCHE PATENTSCHRIFT**

(45) Veröffentlichungstag und Bekanntmachung des Hinweises auf die Patenterteilung:
**18.03.2026   Patentblatt 2026/12**

(21) Anmeldenummer: **22180715.9**

(22) Anmeldetag: **23.06.2022**

(51) Internationale Patentklassifikation (IPC):
**F03D 7/02** (2006.01)

(52) Gemeinsame Patentklassifikation (CPC):
**F03D 7/0276;** Y02E 10/72

(54) **VERFAHREN ZUM STEUERN EINER WINDENERGIEANLAGE ZUM SCHUTZ VON VÖGELN UND FLEDERMÄUSEN**

METHOD FOR CONTROLLING A WIND TURBINE FOR PROTECTING BIRDS AND BATS

PROCÉDÉ DE COMMANDE D'UNE ÉOLIENNE DESTINÉ À LA PROTECTION DES OISEAUX ET DES CHAUVES-SOURIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.12.2023   Patentblatt 2023/52**

(73) Patentinhaber: **Wobben Properties GmbH**
**26607 Aurich (DE)**

(72) Erfinder:
• **Länger-Möller, Annika**
**26603 Aurich (DE)**

• **Lorenz, Fabian**
**39124 Magdeburg (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 2 017 470    EP-A1- 4 012 175
EP-B1- 2 673 502    EP-B1- 2 721 292
EP-B1- 3 183 687    DE-A1- 102019 000 719

**Beschreibung**

Die vorliegende Erfindung betrifft ein Verfahren zum Steuern einer Windenergieanlage sowie eine entsprechende Windenergieanlage.

Windenergieanlagen weisen einen Rotor mit mehreren Rotorblättern auf. Um elektrische Leistung aus Wind zu erzeugen, wird ein solcher Rotor durch den Wind in eine Drehbewegung versetzt. Aufgrund der großen Ausmaße eines solchen Rotors, der häufig Durchmesser von über 100 Meter, oftmals sogar über 150 Meter aufweist, können am äußeren Rand des Rotors, und damit an den Spitzen der Rotorblätter, Geschwindigkeiten im Bereich von bis zu 300 km/h auftreten.

Solche hohen Geschwindigkeiten können für Vögel und Fledermäuse eine Gefahr darstellen, denn solche hohen Geschwindigkeiten können selbst schnell fliegende Vögel nicht mehr richtig einschätzen und können daher von einem sich so schnell bewegenden Rotorblatt verletzt oder sogar erschlagen werden.

Besonders problematisch ist es, wenn Windenergieanlagen im Bereich des Habitats gefährdeter Vogel- oder Fledermausarten aufgestellt und betrieben werden sollen. Sofern keine Lösung zum Schutz solcher gefährdeten Arten gefunden wird, kann es dazu kommen, dass das Aufstellen einer Windenergieanlage vollständig untersagt wird.

Letztlich sind Windenergieanlagen aber aus den bekannten Gründen gegenüber herkömmlichen Kraftwerken umweltschonend und daher sollte möglichst versucht werden, eine Windenergieanlage auch aufzustellen, indem gefährdete Arten anderweitig geschützt werden.

Eine Möglichkeit, gefährdete Arten zu schützen, besteht darin, die Windenergieanlage, die in der Nähe eines Habitats gefährdeter Arten aufgestellt wird, nur zu betreiben, wenn die gefährdeten Tiere nicht in der Nähe sind.

Für Fledermäuse ist bekannt, dass sie bei ungünstigen Bedingungen (zu kalt, zu viel Regen, zu stürmisch oder zu hell) nicht fliegen, sodass zu solchen Zeiten die Windenergieanlage ohne Gefährdung der Fledermäuse betrieben werden kann.

Bei Vögeln, was auch bei Fledermäusen angewendet werden kann, sind inzwischen Systeme verfügbar, die automatisch erkennen können, ob ein Tier der Windenergieanlage zu nahe kommt. Solche Systeme sind sogar in der Lage, die in einem Bereich in der Nähe der Windenergieanlage einfliegenden Tiere ihrer Art nach zu identifizieren.

Damit ist es möglich, ein in die Nähe der Windenergieanlage fliegendes Tier zu identifizieren, und davon abhängig die Windenergieanlage anzuhalten, bevor das Tier diese erreichen kann. Solche Systeme funktionieren recht gut, führen aber dennoch häufig zu unnötigen Abschaltungen, denn die wenigsten Tiere, die sich der Windenergieanlage auf eine gewisse Distanz nähern, fliegen dann schließlich auch tatsächlich zur Windenergieanlage. Für diese Tiere, die dann tatsächlich zur Windenergieanlage fliegen, ist das Anhalten der Windenergieanlage aber richtig und wichtig. In allen übrigen Fällen ergibt sich jedoch ein unnötiger Ertragsverlust.

Der Stand der Technik spiegelt sich wider in den Dokumenten DE 10 2019 220 281 B3, EP 3 123 025 B1, EP 2 673 502 B1 and EP 2 017 470 A1.

Der vorliegenden Erfindung liegt somit die Aufgabe zugrunde, zumindest eines der oben genannten Probleme zu adressieren. Insbesondere soll eine Lösung vorgeschlagen werden, bei der eine Windenergieanlage gefährdete Arten von Vögeln und Fledermäusen so wenig wie möglich gefährdet, bei gleichzeitig möglichst hohem Ertrag. Zumindest soll zu bisher bekannten Lösungen eine Alternative vorgeschlagen werden.

Erfindungsgemäß wird ein Verfahren nach Anspruch 1 vorgeschlagen. Dieses Verfahren ist somit ein Verfahren zum Steuern einer Windenergieanlage, die einen Rotor mit in ihrem Blattwinkel verstellbaren Rotorblättern und mit einem Rotordurchmesser aufweist. Der Rotor, und damit die Windenergieanlage insgesamt, ist mit einer veränderlichen Rotordrehzahl betreibbar. Ein Bereich, in dem sich die Rotorblätter bewegen, bildet einen Gefahrenbereich für Vögel und Fledermäuse. Davon ausgehend arbeitet das Verfahren gemäß den folgenden Schritten.

In einem Schritt wird auf einen sich der Windenergieanlage nähernden Vogel oder Fledermaus als gefährdeter Vogel geprüft. Nachfolgend werden somit Vögel und Fledermäuse der Einfachheit halber als Vögel bezeichnet und wenn sich eines dieser Tiere der Windenergieanlage nähert, nämlich im Fluge, wird es als gefährdeter Vogel bezeichnet. Eine Fledermaus, die sich der Windenergieanlage nähert, wird nachfolgend der Einfachheit halber also auch als gefährdeter Vogel bezeichnet. Natürlich ist bekannt, dass eine Fledermaus kein Vogel ist, zu den hier vorgeschlagenen Lösungen wurde aber erkannt, dass sie auf Fledermäuse ebenfalls anwendbar sind. Insoweit es Besonderheiten zu beachten gibt, wird darauf ausdrücklich hingewiesen.

Ein weiterer Schritt ist, wenn ein gefährdeter Vogel erkannt wurde, eine Vogelposition als aktuelle Position des erkannten gefährdeten Vogels zu erfassen. Hier geht es besonders darum, in welchem Abstand sich der gefährdete Vogel jeweils befindet, es können aber weitere Informationen berücksichtigt werden, wie die konkrete Richtung, aus der der gefährdete Vogel sich der Windenergieanlage genähert hat. Auch die Höhe in der sich der gefährdete Vogel in dem Moment befindet, kann eine weitere Information der Vogelposition sein.

Im nächsten Schritt wird dann das Steuern der Rotordrehzahl in Abhängigkeit von der Vogelposition in Bezug auf die Windenergieanlage vorgeschlagen. Die Rotordrehzahl wird dabei in mehreren Stufen oder kontinuierlich mit abnehmendem Abstand der Vogelposition zur Windenergieanlage reduziert.

Es wird also der genaue Abstand der Vogelposition, also der Abstand des gefährdeten Vogels zur Windenergieanlage berücksichtigt und davon abhängig die Rotordrehzahl reduziert, nämlich umso stärker reduziert, je näher der gefährdete Vogel an der Windenergieanlage ist.

Die Rotordrehzahl kann beispielsweise, um es zu veranschaulichen, umso geringer sein, je näher der gefährdete Vogel an der Windenergieanlage ist. Das ist aber nur ein Beispiel und es muss kein proportionaler, also linearer Zusammenhang zwischen Abstand und Rotordrehzahl bestehen, und es können auch diverse weitere Kriterien berücksichtigt werden, wie nachfolgend noch erläutert wird.

Im Grunde ist idealisierend vorgesehen, die Rotordrehzahl in Abhängigkeit vom Abstand der Vogelposition kontinuierlich zu steuern, es kommt aber auch eine stufenweise Reduzierung in Betracht. So können beispielsweise zehn Abstände definiert werden, zu denen jeweils eine vorgebbare Rotordrehzahl einzustellen ist. Eine solche oder andere Reduzierung der Rotordrehzahl in mehreren Stufen ist sehr ähnlich zu einer kontinuierlichen Reduzierung, denn auch bei der Reduzierung über Stufen erfolgt natürlich die Drehzahlreduzierung häufig faktisch kontinuierlich, da eine Drehzahl nicht sprunghaft verändert werden kann. Eine Solldrehzahl kann allerdings sprunghaft verändert werden.

Es liegt besonders die Erkenntnis zugrunde, dass die Windenergieanlage eine gewisse Zeit benötigt, um ihre Drehzahl auf null oder zumindest auf eine für den gefährdeten Vogel ungefährliche Drehzahl zu reduzieren. Solange der gefährdete Vogel soweit von der Windenergieanlage weg ist, dass er die Windenergieanlage in dieser Zeit nicht erreichen kann, kann die Windenergieanlage normal weiterbetrieben werden. Kommt der gefährdete Vogel der Windenergieanlage aber zu nahe, kann die Drehzahl entsprechend auf null oder eine geringe Drehzahl, die den Vogel nicht gefährdet, reduziert werden.

Es wurde aber erkannt, dass der gefährdete Vogel nicht unbedingt in Richtung Windenergieanlage weiterfliegt, nachdem er einen solchen ersten kritischen Abstand zur Windenergieanlage unterschritten hat. Dreht der Vogel beispielsweise um, oder fliegt in eine andere Richtung weiter, reicht es aus, die Rotordrehzahl nur etwas zu reduzieren.

Hier liegt besonders die Erkenntnis zugrunde, dass eine Reduzierung auf eine solche Drehzahl sinnvoll ist, von der aus die Drehzahl in der Zeit weiter auf null oder die ungefährliche Drehzahl reduziert werden könnte, wenn der Vogel weiter in Richtung Windenergieanlage fliegt. Je näher der gefährdete Vogel an der Windenergieanlage ist, umso weniger Zeit bräuchte er, die Windenergieanlage zu erreichen. Entsprechend hat die Windenergieanlage weniger Zeit, die Rotordrehzahl auf null oder die ungefährliche Drehzahl zu reduzieren. In diesem Sinne wird die Rotordrehzahl an die Vogelposition angepasst. Je näher der gefährdete Vogel der Windenergieanlage ist, umso geringer ist die Rotordrehzahl, damit sie immer noch auf null oder die ungefährliche Drehzahl reduziert werden könnte, bevor der gefährdete Vogel die Windenergieanlage erreicht.

Gemäß einem Aspekt wird vorgeschlagen, dass von dem gefährdeten Vogel seine Vogelart oder andere Kategorie identifiziert wird. Der Vogel wird somit auf Artebene identifiziert, besonders um gefährdete und streng bzw. besonders geschützte Arten zielgerichtet zu schützen Das beinhaltet natürlich auch, dass im Falle einer Fledermaus mindestens die Klassifizierung als Fledermaus stattfindet und nach Möglichkeit die Art bestimmt wird. Es kommt aber auch in Betracht, eine andere Kategorie wie eine Einteilung in Größen, wie z.B. klein, mittel und groß vorzunehmen.

Weiterhin wird vorgeschlagen, dass ein Reaktionsbereich um die Windenergieanlage in Abhängigkeit von der identifizierten Vogelart festgelegt wird, wobei der Reaktionsbereich einen Bereichsrand aufweist und der Reaktionsbereich dadurch definiert ist, dass die Windenergieanlage die Rotordrehzahl auf eine Trudeldrehzahl, eine Schutzdrehzahl oder den Wert null, reduzieren kann, bevor zu erwarten ist, dass der gefährdete Vogel der identifizierten Vogelart vom Rand des Reaktionsbereichs den Gefahrenbereich erreicht. Weiterhin wird vorgeschlagen, dass die Rotordrehzahl reduziert wird, sobald der gefährdete Vogel in den Reaktionsbereich einfliegt, und die Rotorrehzahl wird umso weiter reduziert, je näher der gefährdete Vogel dem Gefahrenbereich kommt, ohne dass die Windenergieanlage abgeschaltet oder angehalten wird.

Ist der gefährdete Vogel also außerhalb des Reaktionsbereichs, kann die Windenergieanlage ganz normal betrieben werden. Erreicht der gefährdete Vogel aber von außen kommend den Bereichsrand, wird die Schutzsteuerung tätig und reduziert die Rotordrehzahl mit zunehmender Nähe des gefährdeten Vogels zum Gefahrenbereich.

Der Reaktionsbereich und damit besonders sein Bereichsrand, ist so bemessen, dass die jeweils identifizierte Vogelart nicht den Gefahrenbereich erreichen kann, bevor die Rotordrehzahl auf die ungefährliche Drehzahl abgesenkt wurde, wenn der gefährdete Vogel außerhalb des Reaktionsbereichs ist, also wenigstens den Abstand des Bereichsrandes zum Gefahrenbereich hat. Dabei wurde aber erkannt, dass die Windenergieanlage eine gewisse Zeit benötigt, um die Rotordrehzahl entsprechend zu reduzieren, ein gefährdeter Vogel aber je nach Art unterschiedlich weit in dieser Zeit fliegen kann. Daran wird der Reaktionsbereich angepasst.

Es ist auch zu beachten, dass der Gefahrenbereich nicht unbedingt ein Kreis in einer horizontalen Ebene sein muss, sondern besonders den Bereich definiert, in dem sich die Rotorblätter bewegen. In einer Draufsicht kann das ein Bereich sein, der quer zur Rotorachse etwas größer als der Rotordurchmesser ist, in Rotorlängsachse aber deutlich kürzer ist.

Jedenfalls wird aber der Reaktionsbereich umso größer gewählt, umso schneller ein gefährdeter Vogel der identifizierten Vogelart fliegen kann.

Fliegt der Vogel in den Reaktionsbereich ein, wird die Rotordrehzahl reduziert, aber nicht automatisch auf null oder eine ungefährliche Drehzahl, sondern nur so stark, wie aufgrund des verbleibenden Abstands des gefährdeten Vogels zum Gefahrenbereich erforderlich ist.

Eine Rotordrehzahl mit dem Wert null ist insoweit eine ungefährliche Drehzahl. Eine Trudeldrehzahl kann ebenfalls eine ungefährliche Drehzahl sein. Eine Trudeldrehzahl ist eine Drehzahl, die die Windenergieanlage in einem Trudelbetrieb einnehmen kann, wobei ein Trudelbetrieb ein solcher ist, bei dem die Rotorblätter in ihrem Blattwinkel jeweils so eingestellt wurden, dass sie einen Trudelblattwinkel aufweisen. Ein solcher Trudelblattwinkel kann im Bereich von 60° liegen. Bei einem solchen Trudelwinkel sind die Rotorblätter soweit aus dem Wind gedreht, dass sie im Wind nicht mehr als aerodynamisches Profil fungieren, bei dem eine laminare Windströmung entlang einer Saugseite und entlang einer Druckseite des Rotorblattes als im Wesentlichen laminare Strömung strömt und entsprechend eine Saug- bzw. Druckkraft ausübt. Dennoch kann der Wind besonders eine partielle Druckkraft auf die Rotorblätter ausüben und zu einer schwachen Bewegung, nämlich Drehung des Rotors, führen.

Eine Trudeldrehzahl liegt üblicherweise im Bereich von 1 bis 3 Umdrehungen pro Minute.

Ebenfalls kann eine Schutzdrehzahl vorgesehen sein, die eine Drehzahl bezeichnet, bei der der konkrete Rotor keine Gefährdung für den gefährdeten Vogel darstellt. Eine solche Schutzdrehzahl kann insbesondere von der Größe des Rotors, also Rotordurchmesser bzw. Blattlänge abhängen, denn je länger ein Rotorblatt ist, umso höher ist die Umfangsgeschwindigkeit an seiner Blattspitze. Vorzugsweise wird die Schutzdrehzahl in Abhängigkeit von der identifizierten Vogelart vorgegeben.

Gemäß einem Aspekt wird vorgeschlagen, dass eine Anzahl sich der Windenergieanlage nähernder Vögel oder Fledermäuse als Anzahl gefährdeter Vögel identifiziert wird und das Steuern der Windenergieanlage, insbesondere das Steuern der Rotordrehzahl in Abhängigkeit von der identifizierten Anzahl gefährdeter Vögel durchgeführt wird.

Hier wurde erkannt, dass manche Vögel ein Schwarmverhalten aufweisen und davon ein Verhalten abgeleitet werden kann. Es kommt auch in Betracht, dass bei nur wenigen gefährdeten Vögeln eine höhere Gefährdung hingenommen werden kann, sodass bei wenigen Vögeln, ggf. je nach Vogelart, eine Drehzahlreduzierung später, oder gar nicht durchgeführt wird. Vorzugsweise wird vorgeschlagen, eine Steuerung der Windenergieanlage in Abhängigkeit von der identifizierten Anzahl gefährdeter Vögel entsprechend der Aspekte durchzuführen wie zur Steuerung in Abhängigkeit der identifizierten Vogelart oder anderen Kategorie vorgeschlagen wurde.

So kann eine identifizierte Anzahl gefährdeter Vögel in eine Kategorie klein, mittel oder groß vorgenommen werden und in Abhängigkeit davon die Steuerung der Drehzahl durchgeführt werden.

Somit kann die identifizierte Anzahl gefährdeter Vögel, die synonym als Vogelanzahl bezeichnet werden kann, auch ein Auslösekriterium sein. Es wird vorgeschlagen, dass mehrere Ziele, also mehrere Vögel, parallel beobachtet werden. Dabei wird vorgeschlagen, dass die Steuerung sich besonders für eine Stoppauslösung auf das am dichtesten an der Anlage befindliche Individuum bezieht, oder auf das Individuum mit der höchsten Wahrscheinlichkeit einer Kollision. Auch hier können Grundlage Geschwindigkeit und Flugrichtung und weitere Kriterien sein. Vorzugsweise kommt in Betracht, eine Reduzierung oder Abschaltung bei Schwärmen ab 5 Tieren im Umkreis mit einer vorbestimmten Entfernung zur Windenergieanlage zum WEA-Standort vorzusehen.

Erfindungsgemäß wird die Rotordrehzahl gemäß einer Drehzahl-Abstandsfunktion vorgegeben wobei die Drehzahl-Abstandsfunktion eine Drehzahl als Funktion von einem Abstand des gefährdeten Vogels zum Gefahrenbereich bezeichnet. Das ist also der Abstand zwischen Vogelposition und Gefahrenbereich. Die jeweils einzustellende Drehzahl kann somit durch die Drehzahl-Abstandsfunktion in Abhängigkeit vom Abstand des gefährdeten Vogels zum Gefahrenbereich fest vorgegeben werden. Zur Umsetzung braucht lediglich die Vogelposition bestimmt zu werden, aus der der Abstand des gefährdeten Vogels zum Gefahrenbereich bestimmt werden kann. Basierend auf diesem so ermittelten Abstand kann dann aus der Drehzahl-Abstandsfunktion eine zugehörige einzustellende Drehzahl, nämlich Rotordrehzahl abgelesen werden. Die zu erwartende Rotordrehzahl ist dadurch fest vorgegeben und dadurch liegt ein sehr gut reproduzierbares Verfahren vor.

Außerdem oder alternativ wird vorgeschlagen, dass die Rotordrehzahl und/oder die Drehzahl-Abstandsfunktion eingestellt oder ausgewählt wird in Abhängigkeit von einer Jahreszeit und/oder einer Tageszeit und/oder der identifizierten Vogelart.

Hierdurch können spezielle Verhalten des jeweils gefährdeten Vogels berücksichtigt werden. Besonders wurde erkannt, dass sich Vögel während der Brutzeit anders verhalten, als außerhalb der Brutzeit. In der Brutzeit ist besonders zwischen der Zeit des Nestbaus, der Zeit des tatsächlichen Ausbrütens der Eier und der Zeit der Aufzucht der geschlüpften Küken zu unterscheiden. Zunächst unterscheidet sich die generelle Brutzeit von anderen Zeiten schon darin, dass sich die Vögel in der Nähe des Nestes bzw. zu bauenden Nestes aufhalten. Beim Nestbau gibt es eine hohe Aktivität zur Beschaffung von Baumaterial, was zu einem anderen Verhalten führen kann, als bei dem Ausbrüten, wenn meist ein Vogel das Nest nicht verlässt, während der andere nur für sich oder seinen Partner auf Nahrungssuche ist. Sobald die Küken geschlüpft sind, ergibt sich eine hohe Aktivität zur Nahrungssuche zur Aufzucht der Küken.

Entsprechend kann auch die Tageszeit eine Rolle spielen, denn zu unterschiedlichen Tageszeiten erfolgt meist eine unterschiedliche Nahrungssuche. So fliegen beispielsweise Insekten, wenn diese die Nahrung des gefährdeten Vogels sind, weniger zur Mittagszeit. Manche Vögel, besonders Geier und große Greifvögel, nutzen Thermik zum Fliegen, sodass ihr Verhalten bei starker Thermik, und damit besonders in der Mittagswärme, anders ist, als beispielsweise in den Morgenstunden.

Entsprechend hängt das Verhalten der Vögel auch von ihrer Art, also der Vogelart ab, wie schon am Beispiel der Vögel verdeutlicht wurde, die eine große Thermik zum Fliegen ausnutzen.

Entsprechend wird vorgeschlagen, die Rotordrehzahl daran anzupassen, denn das unterschiedliche Verhalten der Vögel nach Jahreszeit, Tageszeit und/oder Vogelart führt auch zu einem unterschiedlichen potenziellen Annäherungsverhalten des betreffenden Vogels an die Windenergieanlage, also an den Gefahrenbereich.

Gemäß einem Aspekt wird vorgeschlagen, dass die Rotordrehzahl wieder erhöht wird, wenn sich der gefährdete Vogel wieder vom Gefahrenbereich entfernt und sich noch im Reaktionsbereich befindet.

Hier wurde besonders erkannt, dass mit einer Erhöhung der Rotordrehzahl nicht gewartet zu werden braucht, bis der gefährdete Vogel den Reaktionsbereich vollständig verlassen hat. Die Art und Weise, wie die Rotordrehzahl mit abnehmendem Abstand des Vogels zum Gefahrenbereich reduziert wurde, kann auch umgekehrt angewendet werden, wenn sich der Vogel von der Windenergieanlage wieder entfernt. Es wurde erkannt, dass auch hier relevant ist, dass ein weiter entfernter Vogel mehr Zeit benötigt, um die Windenergieanlage zu erreichen, als wenn er näher dran ist. Die Windenergieanlage hat also wieder mehr Zeit, ihre Rotordrehzahl gegebenenfalls auf eine ungefährliche Drehzahl zu reduzieren, und kann daher die Rotordrehzahl bereits erhöhen, was zu einer höheren Leistungsausbeute führen kann.

Gemäß einem Aspekt wird vorgeschlagen, dass die Windenergieanlage mit einer Schutzdrehzahl betrieben wird und Leistung erzeugt, solange sich der gefährdete Vogel im Gefahrenbereich befindet. Die Schutzdrehzahl, wie oben auch schon erläutert wurde, ist eine Drehzahl, die für den gefährdeten Vogel als ungefährlich gilt, selbst wenn er sich im Gefahrenbereich aufhält. Insbesondere wird somit vorgeschlagen, die Schutzdrehzahl in Abhängigkeit von der identifizierten Vogelart festzulegen.

Eine solche Schutzdrehzahl ist eine vergleichsweise geringe Rotordrehzahl, die so gewählt wird, dass die Blattspitzengeschwindigkeit vorzugsweise kleiner als 120km/h, insbesondere kleiner als 60km/h und weiter insbesondere 30 km/h (8.3 m/s) ist. Hier wurde erkannt, dass Vögel, insbesondere in Abhängigkeit von ihrer Vogelart, durch Rotoren von Windenergieanlagen nur gefährdet sind, wenn sich diese zu schnell drehen. Vögel sind es grundsätzlich gewohnt, so zu fliegen, dass sie nicht mit anderen sich bewegenden Objekten kollidieren, solange diese sich nicht zu schnell bewegen.

Diese Erkenntnis wurde sich hier zu Nutze gemacht und es wurde erkannt, dass die Windenergieanlage mit einer solchen langsamen Schutzdrehzahl sogar so betrieben werden kann, dass sie Leistung abgibt. Eine solche Leistung wird unterhalb der Leistung liegen, die erzeugt werden könnte, wenn die Windenergieanlage nicht auf die Schutzdrehzahl reduziert werden müsste. Es wurde aber erkannt, dass zumindest etwas Leistung erzeugt werden kann.

Die Schutzdrehzahl hängt dabei insbesondere von der identifizierten Vogelart ab. Insbesondere kann die Schutzdrehzahl umso höher liegen, umso schneller der Vogel selbst fliegen kann. Hier wurde erkannt, dass Vögel die Geschwindigkeit und Bewegung eines Objektes solange gut einschätzen können, solange diese sich ungefähr mit der Geschwindigkeit bewegen, mit der der Vogel selbst fliegen kann. Auch wurde erkannt, dass die Sehfähigkeit einen Einfluss haben kann. Insbesondere wird für Greifvögel eine höhere Schutzdrehzahl als für Nichtgreifvögel und für Fledermäuse gewählt.

Gemäß einem Aspekt wird vorgeschlagen, dass die Rotordrehzahl auf die Schutzdrehzahl reduziert wird, die für den gefährdeten Vogel als ungefährlich gilt, wenn der gefährdete Vogel in den Reaktionsbereich einfliegt. Die Rotordrehzahl wird weiter auf null oder eine Trudeldrehzahl reduziert, wenn der gefährdete Vogel in einen reduzierten Vorgefahrenbereich einfliegt, der eine Bereichsgrenze aufweist, die innerhalb des Reaktionsbereichs, aber außerhalb des Gefahrenbereichs liegt. Die Rotordrehzahl wird dabei so weit reduziert, dass sie die Trudeldrehzahl erreicht, oder die Anlage anhält, bevor der gefährdete Vogel den Gefahrenbereich erreicht hat.

Dazu wird außerdem vorgeschlagen, die Windenergieanlage mit dieser Schutzdrehzahl weiter zu betreiben, und insbesondere dabei Leistung zu erzeugen, bis der Vogel den Vorgefahrenbereich erreicht. Es wird also ausdrücklich vorgeschlagen, trotz gefährdeten Vogels im Vorgefahrenbereich die Anlage unter Erzeugung von Leistung weiter zu betreiben, allerdings in einem reduzierten Maße.

Auch hier wird vorgeschlagen, die Reaktionsdrehzahl und/oder die Schutzdrehzahl in Abhängigkeit von der Vogelart des gefährdeten Vogels vorzugeben.

Dieser Aspekt sieht somit eine vereinfachte Steuerung vor, die im Wesentlichen zwischen drei Rotordrehzahlen unterscheidet, nämlich einer normalen Rotordrehzahl, der Schutzdrehzahl und der Trudeldrehzahl oder dem Wert 0. Fliegt der gefährdete Vogel in den Reaktionsbereich ein, erfolgt somit in einem Schritt eine Reduktion der Rotordrehzahl auf die Schutzdrehzahl. Diese ist somit langsamer als die normale Rotordrehzahl, also langsamer als die Rotordrehzahl, mit der die Windenergieanlage betrieben wurde, bevor der Vogel in den Reaktionsbereich eingeflogen ist.

Nähert sich der Vogel nun weiter dem Gefahrenbereich, so wird die Reduktion der Drehzahl fortgesetzt, nämlich bis zur Trudeldrehzahl oder dem Wert 0, sobald er den Vorgefahrenbereich erreicht hat. In diesem weiteren Schritt erfolgt also diese letzte Reduzierung, ohne dass unbedingt der Abstand des Vogels vom Gefahrenbereich genau verfolgt werden muss. Das Verfahren dieser einfachen Stufen ist vorteilhaft, weil es das Abschalten der Windenergieanlage, zumindest ein zu frühes Abschalten oder Anhalten, vermeidet.

Umgekehrt kann die Windenergieanlage dann auch schnell wieder in den Normalbetrieb versetzt werden, wenn der gefährdete Vogel den Reaktionsbereich wieder verlassen hat.

Dieser Aspekt schlägt also zwei einfach implementierbare Schritte vor, die dennoch mehr Ertrag gestatten, als bei einer Variante, bei der nach Eindringen eines Vogels in den Reaktionsbereich die Windenergieanlage sofort angehalten wird.

Gemäß einem Aspekt wird vorgeschlagen, dass die Windenergieanlage, solange sie nicht mit Nenndrehzahl und Nennleistung betrieben wird, also insbesondere im Teillastbetrieb, mit einer Betriebskennlinie betrieben wird, bei der eine elektrische oder mechanische Leistung oder ein Generatormoment in Abhängigkeit von der Rotordrehzahl vorgegeben wird. Dabei wird eine Normalkennlinie als Betriebskennlinie verwendet, wenn kein sich der Windenergieanlage nähernder gefährdeter Vogel erkannt wurde. Dazu wird weiter vorgeschlagen, dass eine Vogelschutzkennlinie als Betriebskennlinie verwendet wird, die im Vergleich zur Normalkennlinie bei jeweils gleichen Werten der Rotordrehzahl höhere Werte der Leistung bzw. des Generatormomentes aufweist, oder die bei gleicher Leistung bzw. gleichem Generatormoment eine reduzierte Drehzahl aufweist, wenn ein sich der Windenergieanlage nähernder gefährdeter Vogel erkannt wurde. Außerdem oder alternativ wird die Verwendung der Vogelschutzkennlinie vorgeschlagen, wenn ein gefährdeter Vogel in einem Bereich außerhalb des Reaktionsbereichs erkannt wurde. Außerdem oder alternativ wird vorgeschlagen, dass eine Vogelschutzkennlinie verwendet wird, wenn eine hohe Wahrscheinlichkeit besteht, dass ein gefährdeter Vogel in den Reaktionsbereich einfliegt. Das wird besonders dann vorgeschlagen, wenn eine überdurchschnittliche Wahrscheinlichkeit dafür besteht.

Dieser Aspekt geht somit davon aus, dass die Windenergieanlage im Teillastbetrieb mit einer Betriebskennlinie betrieben wird. Eine solche Betriebskennlinie kann auch als Drehzahl-Leistungs-Kennlinie bzw. als Drehzahl-Drehmoment-Kennlinie beschrieben werden.

Im Teillastbetrieb ist die Windgeschwindigkeit unterhalb einer Nennwindgeschwindigkeit, sodass die Windenergieanlage keine Nennleistung erzeugen kann. In diesem Fall wird eine Windenergieanlage üblicherweise so betrieben, dass eine ideale Schnelllaufzahl vorliegt.

Entsprechend wird die Windenergieanlage so gesteuert, dass mit steigender Windgeschwindigkeit auch die Drehzahl steigt, denn die Schnelllaufzahl ist der Quotient aus Drehzahl und Windgeschwindigkeit bzw. aus der Umlaufgeschwindigkeit einer Blattspitze und der Windgeschwindigkeit.

Dazu wird eine entsprechend optimale Drehzahl-Leistungs-Kennlinie bzw. Drehzahl-Drehmoment-Kennlinie vorgegeben, die hier als Normalkennlinie bezeichnet wird. Die Steuerung am Beispiel der Drehzahl-Leistungs-Kennlinie erfolgt so, dass die Drehzahl erfasst wird und entsprechend der Kennlinie eine Leistung eingestellt wird. Die Drehzahl-Leistungs-Kennlinie gibt also eine einzustellende Leistung in Abhängigkeit von der Drehzahl an. Ist die eingestellte Drehzahl beispielsweise geringer als die Leistung, die in dem Moment dem Wind durch den Rotor entnommen wird, erhöht sich die Drehzahl. Entsprechend ist aus der Drehzahl-Leistungs-Kennlinie dann ein höherer Leistungswert zu entnehmen, denn die Drehzahl-Leistungs-Kennlinie ist eine mit der Drehzahl ansteigende Kennlinie, und das erfolgt solange, bis der eingestellte Leistungswert der Leistung entspricht, die in dem Moment aus dem Wind entnommen werden kann. Dann ist ein stabiler Arbeitspunkt gefunden.

In diesem Sinne erfolgt auch eine Steuerung einer Drehzahl-Drehmoment-Kennlinie, die ein in Abhängigkeit von der erfassten Drehzahl einzustellendes Drehmoment angibt.

Die Vogelschutzkennlinie weist zu gleichen Drehzahlwerten höhere Leistungswerte bzw. höhere Werte des Generatormomentes auf. Das führt dazu, dass bei geringeren Drehzahlen bereits die aus dem Wind entnehmbare Leistung erreicht wird, und damit der stabile Arbeitspunkt erreicht wird, sodass die Vogelschutzkennlinie zu einer im Vergleich zur Normalkennlinie reduzierten Drehzahl führt.

Dabei wurde erkannt, dass mit Verwendung einer anderen Betriebskennlinie, also der Vogelschutzkennlinie statt der Normalkennlinie, zwar eine Reduzierung der Drehzahl erreicht wird, aber nicht unbedingt eine große Leistungsreduzierung damit einhergehen muss. Eine Leistungsreduzierung ergibt sich nur insoweit die Vogelschutzkennlinie weniger optimal als die Normalkennlinie ist. Daher ist mit einer geringeren Leistung zu rechnen, die aber nur wenig unter der Leistung liegt, die mit der Normalkennlinie erzielt werden kann.

Damit wurde erkannt, dass eine Drehzahlreduzierung ohne große Leistungsreduzierung erreicht werden kann. Mit der so reduzierten Rotordrehzahl kann sich somit ein gefährdeter Vogel der Windenergieanlage stärker annähern, bevor die Windenergieanlage in ihrer Drehzahl zum Schutz des gefährdeten Vogels weiter reduziert werden muss.

Allerdings kann durch eine solche Vogelschutzkennlinie die Drehzahl nicht beliebig bei annähernd gleicher Leistung reduziert werden. Zum einen ergibt sich ein aerodynamisch immer schlechterer Arbeitspunkt, der besonders die Gefahr eines Strömungsabrisses birgt.

Zum anderen kann eine gleiche Leistung bei reduzierter Rotordrehzahl nur durch ein entsprechend erhöhtes Generatormoment erreicht werden. In einem Generator kann aber das Generatormoment nicht beliebig erhöht werden. Es wurde aber erkannt, dass im Teillastbetrieb der Generator üblicherweise noch nicht mit maximalem Generatormoment betrieben wird und daher häufig noch die Möglichkeit besteht, das Generatormoment hochzusetzen und damit die Rotordrehzahl durch die Vogelschutzkennlinie zu reduzieren, ohne die Leistung nennenswert zu reduzieren.

Dieses Verhalten wird besonders vorgeschlagen, wenn ein sich der Windenergieanlage nähernder gefährdeter Vogel erkannt wurde. Die Wahl der Vogelschutzkennlinie kann besonders bereits dann erfolgen, wenn der Reaktionsbereich von dem Vogel noch gar nicht erreicht wurde. Hier wurde erkannt, dass eine solche Drehzahlreduzierung, bei der die Leistung kaum reduziert wird, auch schon präventiv durchgeführt werden kann.

Daher wird gemäß einer Variante auch vorgeschlagen, dass die Vogelschutzkennlinie verwendet wird, wenn ein gefährdeter Vogel in einem Bereich außerhalb des Reaktionsbereichs erkannt wurde.

Ebenfalls als eine Prävention wird vorgeschlagen, die Vogelschutzkennlinie zu wählen, wenn eine hohe, insbesondere überdurchschnittliche Wahrscheinlichkeit besteht, dass ein gefährdeter Vogel in den Reaktionsbereich einfliegt. Insbesondere kann vorgesehen sein, dass die Windenergieanlage nachts mit einer Normalkennlinie betrieben wird, tagsüber mit der Vogelschutzkennlinie. Soweit keine Fledermäuse erwartet werden, in dem Fall könnte es genau umgekehrt vorgeschlagen werden. Um zum Beispiel des Vogels zurückzukehren, so ist des nachts nicht mit einem gefährdeten Vogel zu rechnen. Tagsüber ist die Wahrscheinlichkeit damit höher und für einen 24-Stunden-Tag gerechnet ist die Wahrscheinlichkeit tagsüber überdurchschnittlich, dass ein gefährdeter Vogel in den Reaktionsbereich einfliegt.

Vorzugsweise wird vorgeschlagen, dass der Reaktionsbereich in Abhängigkeit von der Vogelschutzkennlinie eingestellt wird. Hier liegt die Erkenntnis zugrunde, dass die Vogelschutzkennlinie generell zu einer reduzierten Drehzahl führt und somit sich ein gefährdeter Vogel der Windenergieanlage auf einen geringeren Abstand nähern kann, bevor die Rotordrehzahl weiter reduziert werden muss. Das kann durch den veränderten Reaktionsbereich berücksichtigt werden.

Gemäß einem Aspekt wird vorgeschlagen, dass die Rotordrehzahl, wenn ein sich der Windenergieanlage nähernder gefährdeter Vogel erkannt wurde, durch Erhöhen des Generatormomentes reduziert wird. Außerdem oder alternativ ist vorgesehen, die Drehzahl durch Verstellen der Blattwinkel der Rotorblätter zu reduzieren.

Durch Erhöhen des Generatormomentes führt dies unmittelbar zum Bremsen des Rotors, und somit dadurch zur Reduzierung der Rotordrehzahl. Dadurch ist eine schnelle Drehzahlreduzierung möglich. In Folge kann sich, also mit einer Zeitverzögerung, die Leistung absenken, weil sich die Drehzahl reduziert und die Leistung proportional zum Produkt aus Drehzahl und Drehmoment ist. Ebenso kann die Leistung erhöht werden, was faktisch ebenfalls dadurch realisiert wird, dass das Generatormoment erhöht wird. Im Grunde wird hierdurch eine elektrische Bremsung durch den Generator erreicht. Diese elektrische Bremsung ist besonders als temporäre Drehzahlreduzierung vorgesehen und ist auch durch die elektrischen, Grenzen der Windenergieanlage beschränkt, besonders in der Höhe, teilweise auch in der möglichen Dauer.

Diese Drehzahlreduzierung ist besonders dann sinnvoll, wenn ein Vogel nur kurz zu einer Drehzahlreduzierung führt. Besonders bei längerfristigen Drehzahlreduzierungen wird vorgeschlagen, die Blätter zusätzlich zu verstellen. Dadurch kann eine langfristige Reduzierung erreicht werden. Es kann somit zunächst elektrisch gebremst werden, dann, falls nötig, ergänzend durch Verstellen der Rotorblätter.

Besonders wenn elektrische Grenzen und/oder der aktuelle Betriebspunkt eine Erhöhung des Generatormoments nicht zulässt, kann vorgesehen sein, nur und/oder sofort die Rotorblätter zu verstellen, also aus dem Wind zu drehen.

Ergänzend kann ein Verstellen der Rotorblätter in ihren Blattwinkeln durchgeführt werden. Besonders dann, wenn die Rotordrehzahl stark reduziert werden soll, insbesondere auf eine Schutzdrehzahl, kann dazu das Ansteuern des Generators nicht ausreichend sein und das Abbremsen des Rotors kann durch das Verstellen des Blattwinkels der Rotorblätter ergänzt werden.

Gemäß einem Aspekt wird vorgeschlagen, dass die Reduzierung der Rotordrehzahl eingestellt wird in Abhängigkeit von einer erfassten Fluggeschwindigkeit des erkannten gefährdeten Vogels und/oder einer typischen, insbesondere maximalen Fluggeschwindigkeit der Vogelart des erkannten gefährdeten Vogels und/oder einer Flugrichtung des erkannten gefährdeten Vogels und/oder einer geschätzten Mindestannäherungszeit, die der erkannte gefährdete Vogel erwartungsgemäß von seiner aktuellen Vogelposition aus wenigstens benötigt, um den Gefahrenbereich zu erreichen.

Es wird somit vorgeschlagen, konkret die erfasste und/oder erwartete Bewegung des erkannten gefährdeten Vogels mit einzubeziehen.

Aus einer erfassten Fluggeschwindigkeit des Vogels lässt sich berechnen, wie schnell er zum Überwinden des aktuellen Abstands zum Gefahrenbereich benötigt.

Außerdem oder alternativ kann eine typische, insbesondere maximale Fluggeschwindigkeit berücksichtigt werden, die aufgrund der identifizierten Vogelart des erkannten gefährdeten Vogels bekannt ist. Dadurch kann im Grunde die Minimalzeit berechnet werden, die der Vogel zum Gefahrenbereich benötigen könnte. Hierzu ist die Verwendung der maximalen Fluggeschwindigkeit die sicherste Methode, um die Minimalzeit zu bestimmen. Wenn aber bspw. bekannt ist, dass die maximale Fluggeschwindigkeit üblicherweise nicht oder nicht im Bereich einer Windenergieanlage geflogen wird, kann eine typische Fluggeschwindigkeit verwendet werden.

Außerdem oder ergänzend wird vorgeschlagen, die Flugrichtung des Vogels zu berücksichtigen. Fliegt der Vogel beispielsweise schnell in den Reaktionsbereich hinein, aber in einer Richtung, die gar nicht zum Gefahrenbereich weist, braucht die Rotordrehzahl mitunter nicht oder nicht so stark reduziert zu werden.

Gemäß einem ergänzenden oder alternativen Vorschlag wird eine Mindestannäherungszeit geschätzt, die der erkannte gefährdete Vogel erwartungsgemäß von seiner aktuellen Vogelposition aus wenigstens benötigt, um den Gefahrenbereich zu erreichen. Eine solche Schätzung der Mindestannäherungszeit kann die bereits genannten Kriterien wie erfasste Fluggeschwindigkeit, maximale Fluggeschwindigkeit und erfasste Flugrichtung berücksichtigen. Es können aber auch andere Kriterien herangezogen werden, wie eine erkannte Beschleunigung oder Reduzierung der Fluggeschwindigkeit des erkannten gefährdeten Vogels. Neben einer Flugrichtung kann auch eine Flugrichtungsänderung berücksichtigt werden. Fliegt der Vogel beispielsweise im Kreis, kann dies bei der Schätzung der Mindestannäherungszeit berücksichtigt werden. Die Mindestannäherungszeit kann aber auch eine Berechnung mit hoher Sicherheit sein, die von den ungünstigsten Bedingungen ausgeht.

Es ist auch zu berücksichtigen, dass die Reduzierung der Rotordrehzahl in Abhängigkeit von der erfassten Fluggeschwindigkeit nicht bedeutet, dass daraus exakt die Zeit bis zum Erreichen des Gefahrenbereichs berechnet wird und erst dann die Rotordrehzahl die Schutzdrehzahl erreicht, sondern es können dabei auch Sicherheiten mitberücksichtigt werden. Beispielsweise kann vorgesehen sein, dass die Schutzdrehzahl, eine, zwei oder fünf Sekunden vorher erreicht wird, bevor der Vogel erwartungsgemäß den Gefahrenbereich erreichen könnte.

Gemäß einem Aspekt wird vorgeschlagen, dass die Windenergieanlage mit einer variablen Sicherheitsdrehzahl betrieben wird, die eine Drehzahl bezeichnet, die ständig der aktuellen Vogelposition angepasst wird, wobei die Sicherheitsdrehzahl so gewählt wird, dass die Rotordrehzahl ausgehend von der Sicherheitsdrehzahl auf die Schutzdrehzahl oder eine Trudeldrehzahl in der Zeit reduziert werden kann, die der gefährdete Vogel von seiner aktuellen Vogelposition erwartungsgemäß wenigstens bis zum Gefahrenbereich benötigt. Insbesondere wird dazu vorgeschlagen, dass die Sicherheitsdrehzahl so gewählt wird, dass das Reduzieren der Rotordrehzahl von der Sicherheitsdrehzahl auf die Schutzdrehzahl bzw. Trudeldrehzahl ohne Notbremsung und mit fortgesetztem Betrieb bei fortgesetzter Leistungserzeugung gewährleistet ist.

Dadurch kann die Rotordrehzahl immer optimal an die Vogelposition angepasst werden. Mit anderen Worten wird die Sicherheitsdrehzahl immer weiter reduziert, wenn sich der Vogel dem Gefahrenbereich nähert, wohingegen sie ständig erhöht werden kann, wenn sich der Vogel von dem Gefahrenbereich weiter entfernt.

Hier liegt besonders der Gedanke zugrunde, dass der Vogel oftmals gar nicht zum Gefahrenbereich fliegt, dies aber nicht ausgeschlossen werden kann. Es wird also immer geprüft, wie lange es noch dauern könnte, sollte der Vogel aus seiner aktuellen Position heraus den Flug Richtung Gefahrenbereich lenken, bis er den Gefahrenbereich erreicht. Es wird somit immer gewährleistet, dass dann die Schutzdrehzahl oder Trudeldrehzahl noch rechtzeitig erreicht werden kann. Solange aber der Vogel entsprechenden Abstand hat, kann die Drehzahl entsprechend höher gewählt werden. Die Sicherheitsdrehzahl ist somit die maximale Drehzahl, die gewählt werden kann, ohne den Vogel zu gefährden.

Besonders wurde hier erkannt, dass die Windenergieanlage mit dieser reduzierten Drehzahl, nämlich der Sicherheitsdrehzahl, weiterbetrieben werden kann. Es kann weiterhin Leistung erzeugt werden, die allenfalls reduziert werden muss, wenn sich der Vogel so verhält, dass die Sicherheitsdrehzahl reduziert werden muss, und es nicht ohne Leistungsreduzierung möglich ist. Hier wird besonders vorgeschlagen, dass die Sicherheitsdrehzahl aber so gering gewählt wird, dass im Fall der Fälle, wenn der Vogel nun doch direkt Richtung Gefahrenbereich fliegt, die Schutzdrehzahl oder Trudeldrehzahl ohne Notbremsung erreicht werden kann. Mit anderen Worten wird die Sicherheitsdrehzahl geringer gewählt als eine Drehzahl, von der aus die Schutzdrehzahl oder Trudeldrehzahl nur mit Notbremsung erreicht werden könnte.

Hier liegt die Erkenntnis zu Grunde, dass zwar eine geringere Sicherheitsdrehzahl gewählt wird, als unbedingt notwendig wäre, dass dafür aber die Windenergieanlage stetig weiterbetrieben werden kann.

Besonders wurde erkannt, dass eine zu niedrig gewählte Sicherheitsdrehzahl, die nämlich nur mit Notbremsung auf die Schutzdrehzahl oder Trudeldrehzahl reduziert werden könnte, auch automatisch dazu führt, dass eine solche Notbremsung eingeleitet werden müsste, wenn der erkannte gefährdete Vogel plötzlich in Richtung auf den Gefahrenbereich fliegt. Eine solche Notbremsung müsste also eingeleitet werden, selbst wenn der Vogel dann einen Moment später den Flug doch nicht in Richtung Gefahrenbereich weiter fortsetzt.

Wird aber die Sicherheitsdrehzahl so gewählt, dass eine Notbremsung nicht erforderlich ist, kann in dem letztgenannten Fall einfach die Rotordrehzahl etwas reduziert werden, während die Windenergieanlage weiterbetrieben wird. Ändert der Vogel dann seine Flugrichtung, befindet sich die Windenergieanlage weiterhin in einem stabilen Betriebspunkt und kann im Übrigen auch ohne Weiteres die Rotordrehzahl wieder erhöhen, sollte sich der Vogel weiter vom Gefahrenbereich entfernen.

Gemäß einem Aspekt wird vorgeschlagen, dass die Rotordrehzahl, die Drehzahl-Abstandsfunktion, die Schutzdrehzahl und/oder der Reaktionsbereich ausgewählt wird bzw. werden in Abhängigkeit von wenigstens einem der folgenden Kriterien.

Ein Kriterium ist eine Sichtweite in der Umgebung der Windenergieanlage, insbesondere im Reaktionsbereich der Windenergieanlage. Bei schlechter Sichtweite kommt zum einen in Betracht, dass der gefährdete Vogel nicht rechtzeitig erkannt wird, wird er aber rechtzeitig erkannt, weil beispielsweise ein entsprechendes technisches Gerät, zum Beispiel ein Radargerät, zur Erkennung eingesetzt wird, kommt in Betracht, dass der Vogel entsprechend langsamer fliegt.

Ein weiteres Kriterium ist eine landwirtschaftliche Tätigkeit in der Umgebung der Windenergieanlage, insbesondere in einem Bereich von bis zu 10 Kilometern, insbesondere bis zu 5 Kilometer Abstand zur Windenergieanlage. Der Bereich kann also einen Kreis mit einem Durchmesser von bis zu 20 Kilometern bzw. bis zu 10 Kilometer um die Windenergieanlage sein, also mit der Windenergieanlage in der Mitte. Hier wurde besonders erkannt, dass viele Vögel einer landwirtschaftlichen Tätigkeit wie dem Ernten oder Pflügen eines Feldes, hinterherfliegen, weil dadurch Beutetiere aufgescheucht werden. Eine solche landwirtschaftliche Tätigkeit hat somit Einfluss auf das Verhalten der Vögel.

Ein weiteres Kriterium ist eine Thermik in der Umgebung der Windenergieanlage, insbesondere im Bereich von bis zu 10 Kilometern, insbesondere bis zu 5 Kilometer Abstand zur Windenergieanlage. Eine solche Thermik beeinflusst ebenfalls das Verhalten mancher Vogelarten, wie oben bereits beschrieben wurde.

Ein weiteres Kriterium ist eine Vorzugsflugrichtung des gefährdeten Vogels. Hier kommt besonders in Betracht, dass der gefährdete Vogel ein Zugvogel ist, der somit besonders in eine Richtung fliegt und davon, gegebenenfalls je nach Tageszeit, nicht abweicht. Fliegt also ein solcher Zugvogel bzw. meistens treten viele solcher Zugvögel zugleich auf, in seine Vorzugsflugrichtung, und würde dabei nicht direkt auf die Windenergieanlage zufliegen, ist auch kaum zu erwarten, dass er seinen Kurs ändert und den Gefahrenbereich erreicht. Entsprechend kann darauf reagiert werden, indem beispielsweise eine Reduzierung der Rotordrehzahl unterbleiben kann, oder eine geringere Reduzierung gewählt werden kann.

Ein weiteres Kriterium ist eine Position der Windenergieanlage in Bezug auf ein Habitat und/oder Jagdgebiet des gefährdeten Vogels. Insbesondere wenn die Windenergieanlage zwischen dem Habitat und dem Jagdgebiet angeordnet ist, ist besondere Vorsicht geboten. Ist die Windenergieanlage nicht genau zwischen Habitat und Jagdgebiet, steht also nur am Rande, ist nicht zu erwarten, dass der Vogel zwischen Habitat und Jagdgebiet quasi einen Umweg über die Windenergieanlage nimmt.

Somit kommt also in Betracht, die Rotordrehzahl in Abhängigkeit von der Sichtweite, der landwirtschaftlichen Tätigkeit, der Thermik, der Vorzugsflugrichtung und/oder der Position der Windenergieanlage auszuwählen.

Ebenfalls wird vorgeschlagen, die Drehzahl-Abstandsfunktion in Abhängigkeit von der Sichtweite, der landwirtschaftlichen Tätigkeit, der Thermik, der Vorzugsflugrichtung und/oder der Position der Windenergieanlage auszuwählen.

Ebenfalls wird vorgeschlagen, die Schutzdrehzahl in Abhängigkeit von der Sichtweite, der landwirtschaftlichen Tätigkeit, der Thermik, der Vorzugsflugrichtung und/oder der Position der Windenergieanlage auszuwählen.

Ebenfalls kommt in Betracht, den Reaktionsbereich in Abhängigkeit von der Sichtweite, der landwirtschaftlichen Tätigkeit, der Thermik, der Vorzugsflugrichtung und/oder der Position der Windenergieanlage auszuwählen.

Gemäß einem Aspekt wird vorgeschlagen, dass im Betrieb der Windenergieanlage Verhalten gefährdeter Vögel aufgezeichnet werden, aus den aufgezeichneten Verhalten Verhaltensmuster abgeleitet werden, insbesondere jeweils für die identifizierte Vogelart, und die Windenergieanlage in Abhängigkeit von dem abgeleiteten Verhaltensmuster gesteuert wird. Insbesondere kann dazu die Rotordrehzahl, die Drehzahl-Abstandsfunktion, die Schutzdrehzahl und/oder der Reaktionsbereich in Abhängigkeit von dem abgeleiteten Verhaltensmuster gesteuert werden.

Als aufgezeichnete Verhalten kommen im Grunde all die vorstehend genannten Kriterien des Verhaltens von Vögeln in Betracht. Dazu gehört, welche Flugrichtung solche Vögel einnehmen, wie schnell sie fliegen, wie stark sie ihre Flugrichtung und/oder Geschwindigkeit ändern. Auch aus welcher Richtung sie kommen und in welche Richtung sie fliegen, kommt als Verhalten in Betracht. Dazu können Kriterien aufgenommen werden, wie Tageszeit, Jahreszeit und Vogelart. Auch die erläuterten Kriterien wie Sichtweite, landwirtschaftliche Tätigkeit, Thermik, Vorzugsflugrichtung und Position der Windenergieanlage in Bezug auf Habitat und/oder Jagdgebiet können mitberücksichtigt werden.

Dazu kann ein Verhaltensmuster abgeleitet werden, zum Beispiel zu welcher Zeit der Vogel zwischen Habitat und Jagdgebiet wechselt. Auch kommt in Betracht, um ein weiteres Beispiel zu nennen, zu welcher Jahreszeit und/oder Tageszeit ein gefährdeter Vogel einer bestimmten Vogelart welche Flugrouten durch den Reaktionsbereich der Windenergieanlage nimmt. All solche Verhaltensmuster können aufgenommen werden und die Windenergieanlagen entsprechend gesteuert werden. Ist beispielsweise als ein Verhaltensmuster aufgenommen worden, dass ein Vogel einer bestimmten Vogelart, oder vielleicht sogar ein konkret identifizierbarer Vogel, immer eine bestimmte Flugroute durch den Reaktionsbereich der Windenergieanlage nimmt, ohne aber jemals in die Nähe des Gefahrenbereichs der Windenergieanlage zu kommen, so kann vorgesehen sein, die Rotordrehzahl dann nicht zu reduzieren, selbst wenn der gefährdete Vogel in den Reaktionsbereich einfliegt, was normalerweise zu einer Reduzierung der Rotordrehzahl führen würde.

Hierbei ist zu beachten, dass das nicht unbedingt bedeuten muss, dass diese Nichtreduzierung der Rotordrehzahl zu einer Gefährdung des Vogels führt, sollte er ausnahmsweise doch seine Flugrichtung zum Gefahrenbereich ändern. Es kann nämlich auch bedeuten, dass es dann immer noch möglich ist, die Rotordrehzahl rechtzeitig zu reduzieren, wenn auch auf die eigentlich ungewünschte Art und Weise eines Notstopps. Das Risiko eines solchen Notstopps kann aber hingenommen werden, wenn aufgrund des abgeleiteten Verhaltensmusters ein solcher Notstopp sehr unwahrscheinlich ist und daher äußerst selten oder vielleicht gar nicht durchgeführt wird.

Gemäß einem Aspekt wird vorgeschlagen, dass Reduzierungen der Rotordrehzahl insbesondere nach Anzahl, Amplitude und/oder Dauer aufgezeichnet werden und eine Lebensdauerberechnung der Windenergieanlage in Abhängigkeit von den aufgezeichneten Reduzierungen durchgeführt oder angepasst wird.

Hier liegt besonders die Erkenntnis zu Grunde, dass eine Windenergieanlage für eine gewisse Lebensdauer ausgelegt ist. Diese Lebensdauer kann beispielsweise in einem üblichen Betrieb nach 20 Jahren erreicht werden. Die Lebensdauer hängt dabei aber stark von der aktuellen Belastung ab. Bei der Auslegung der Windenergieanlage auf die beispielhaft genannten 20 Jahre wird von einer durchschnittlichen Belastung ausgegangen.

Werden nun aber Reduzierungen der Rotordrehzahl durchgeführt, insbesondere, wenn diese nicht als Notstopp durchgeführt werden, sondern eher in einer kontinuierlichen und schonenden Art und Weise, kann dies die Belastung der Windenergieanlage reduzieren. Eine solche Reduzierung der Rotordrehzahl ist zunächst unerwünscht, weil dadurch weniger Leistung erzeugt wird, der Ertrag sich also reduziert. Nun wurde aber erkannt, dass sich wiederum als Vorteil ergibt, dass sich die Lebensdauer durch diese Reduzierung der Rotordrehzahl erhöhen kann.

Werden diese Reduzierungen der Rotordrehzahl entsprechend aufgezeichnet, und kann eine solche Lebensdauer verlässlich neu berechnet werden, kann dann die Windenergieanlage entsprechend länger betrieben werden. Der jährliche Ertrag der Windenergieanlage, der durch die Reduzierung der Rotordrehzahl zurückgegangen sein kann, kann dadurch zwar nicht erhöht werden, gleichwohl kann aber eine gewisse Kompensation dadurch erreicht werden, dass die Windenergieanlage vielleicht ein halbes Jahr oder ein ganzes Jahr länger betrieben werden kann und in der Zeit natürlich ein Ertrag erzielt werden kann.

Erfindungsgemäß wird auch eine Windenergieanlage vorgeschlagen, die einen Rotor mit in ihrem Blattwinkel verstellbaren Rotorblättern und mit einem Rotordurchmesser aufweist, wobei der Rotor mit einer veränderlichen Rotordrehzahl betreibbar ist, und ein Bereich, in dem sich die Rotorblätter bewegen, einen Gefahrenbereich für Vögel und Fledermäuse bildet, wobei die Windenergieanlage dazu vorbereitet ist, ein Verfahren mit folgenden Schritten auszuführen:

- Prüfen auf einen sich der Windenergieanlage nähernden Vogel oder Fledermaus als gefährdeten Vogel, und, wenn ein gefährdeter Vogel erkannt wurde,

- Erfassen einer Vogelposition als aktuelle Position des erkannten gefährdeten Vogels und

- Steuern der Rotordrehzahl in Abhängigkeit von der Vogelposition in Bezug auf die Windenergieanlage, wobei

- die Rotordrehzahl in mehreren Stufen oder kontinuierlich mit abnehmendem Abstand der Vogelposition zur Windenergieanlage reduziert wird.

Die Windenergieanlage ist somit dazu vorbereitet, ein solches Verfahren auszuführen. Dazu weist sie insbesondere eine entsprechende Steuereinrichtung auf, auf der die Verfahrensschritte implementiert sein können.

Zur Erfassung eines gefährdeten Vogels, was auch das Erfassen einer Fledermaus beinhaltet, kann eine Vogelerfassungseinrichtung vorgesehen sein. Solche Vogel-Erfassungseinrichtungen sind grundsätzlich bekannt. Sie können Vögel bzw. Fledermäuse optisch und/oder über Infrarot und/oder über Ultraschall und/oder über Radar erkennen. Dadurch können sie die Position des Vogels erkennen. Durch Aufnahme mehrerer zeitlich beabstandeter Positionen kann eine Geschwindigkeit, Richtung, Geschwindigkeitsänderung und Richtungsänderung abgeleitet und damit erkannt werden. Außerdem werden insbesondere Vogelerfassungseinrichtungen vorgeschlagen, die zudem eine Vogelart erkennen können, einschließlich einer Fledermaus oder Fledermausart. Eine solche Erkennung kann besonders über die Form, Flugverhalten, einschließlich Flügelschlagfrequenz, auch Farben und andere Gestaltmerkmale des Vogels und gegebenenfalls auch über Laute des Vogels oder der Fledermaus durchgeführt werden.

Eine solche Vogelerfassungseinrichtung ist dabei insbesondere mit der Steuereinrichtung verbunden, sodass ein Teil der Auswertung und/oder das Ableiten einer Veränderung der Steuerung der Windenergieanlage auf der Steuereinrichtung durchgeführt werden kann.

Gemäß einem Aspekt wird somit vorgeschlagen, dass die Windenergieanlage eine Vogel-Erfassungseinrichtung aufweist, zum Erfassen eines Vogels oder einer Fledermaus, insbesondere nach Position und/oder Art. Die Erfassung nach Art meint somit die Erfassung einer Vogelart, was das Erfassen einer Fledermausart oder überhaupt das Erfassen, dass das fliegende Tier eine Fledermaus ist, beinhaltet.

Außerdem oder alternativ hat die Windenergieanlage somit eine Steuereinrichtung, und diese Steuereinrichtung kann dazu vorbereitet sein, ein Verfahren gemäß eine der davorstehend beschriebenen Ausführungsformen auszuführen.

Nachfolgend wird die Erfindung exemplarisch anhand von Ausführungsbeispielen unter Bezugnahme auf die begleitenden Figuren näher erläutert.

**Figur 1**    zeigt eine Windenergieanlage in einer perspektivischen Darstellung.

**Figur 2**   zeigt verschiedene relevante Bereiche um eine Windenergieanlage, veranschaulicht durch Kreise.

**Figur 3**   zeigt eine Draufsicht auf eine Windenergieanlage zur Veranschaulichung der möglichen Formen von Bereichen um die Windenergieanlage.

**Figur 4**   zeigt ein Ablaufdiagramm eines vorgeschlagenen Verfahrens.

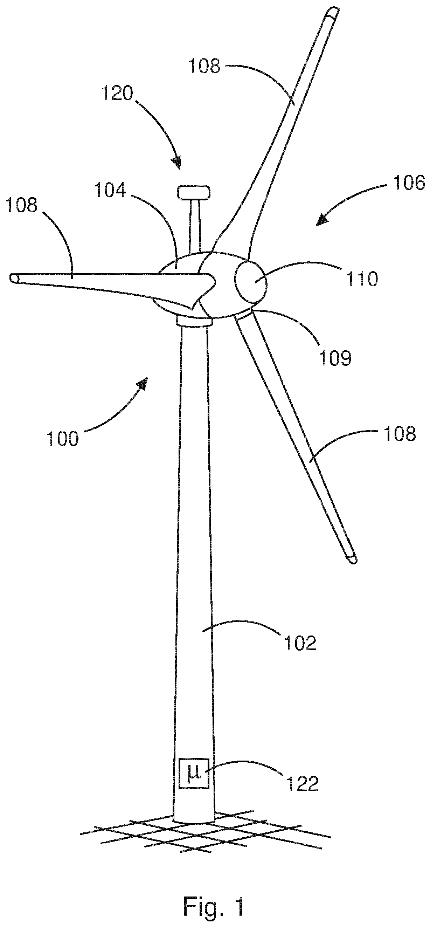

**Figur 1** zeigt eine Windenergieanlage 100 mit einem Turm 102 und einer Gondel 104. An der Gondel 104 ist ein Rotor 106 mit drei Rotorblättern 108, je mit einer Blattwurzel 109, und einem Spinner 110 angeordnet. Der Rotor 106 wird im Betrieb durch den Wind in eine Drehbewegung versetzt und treibt dadurch einen Generator in der Gondel 104 an.

Auf der Gondel 104 ist exemplarisch eine Vogelerfassungseinrichtung 120 angeordnet, die mit einer Steuereinrichtung 122 gekoppelt ist. Die Steuereinrichtung 122 ist besonders dafür vorgesehen, die Windenergieanlage zu steuern, insbesondere die Drehzahl, ihre Leistung und/oder ihr Drehmoment sowie eine Blattstellung der Rotorblätter 108. Der besseren Übersichtlichkeit halber ist die Steuereinrichtung 122 im Turmfuß dargestellt, sie kann aber besonders auch in der Gondel 104 vorgesehen sein, nämlich in der Nähe der Vogelerfassungseinrichtung 120 und auch in der Nähe anderer Stelleinrichtungen wie einer Blattverstelleinrichtung.

Diese Anordnung ist aber nur exemplarisch und es können andere Varianten vorgesehen sein. Besonders eine Turmmontage, also Montage am Turm und auch Freiaufstellung auf einem Mast in einem Windpark, bspw. leistungsfähige Radare oder Kamera-Arrays, sind bevorzugte Varianten. Die Sensorik wird vorzugsweise außerhalb der Rotorfläche installiert, um die Detektion nicht zu erschweren. Diese Varianten unterscheiden sich insoweit von der in Figur 1 dargestellten.

Eine Anbindung an eine Park- oder Windenergieanlagen-Steuerung sowie Stromversorgung kann dann durch ein Erdkabel erfolgen. Die Auswerteeinheit kann bspw. auch in einer Übergabestation, einem Technikcontainer oder einer Leitwarte stehen und per Netzwerk an eine SCADA-Infrastruktur angebunden sein.

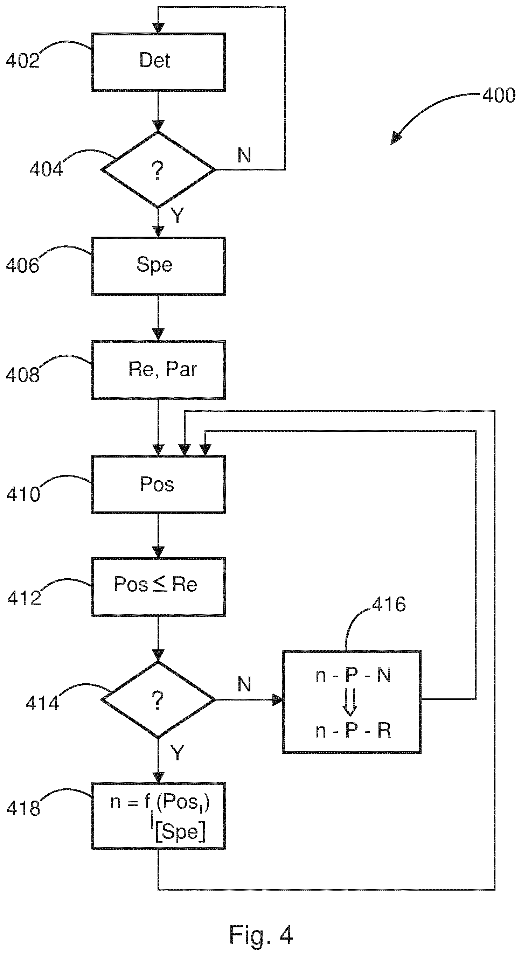

Die Vogelerfassungseinrichtung 120 erfasst somit etwaige Vögel oder Fledermäuse und kann dabei sowohl die Art des Vogels bzw. der Fledermaus erkennen als auch deren Position bestimmen und auch in Echtzeit nachverfolgen. Solche Daten werden an die Steuereinrichtung weitergegeben, die davon abhängig eine Steuerung der Windenergieanlage vornehmen bzw. verändern kann. Die Steuereinrichtung 122 kann aus den empfangenen Daten auch weitere Informationen ableiten wie eine Flugrichtung und eine Fluggeschwindigkeit. Besonders ist die Steuereinrichtung 122 zusammen mit der Vogelerfassungseinrichtung 120 dazu vorbereitet, ein Verfahren durchzuführen, wie es beispielhaft in Figur 4 erläutert wird.

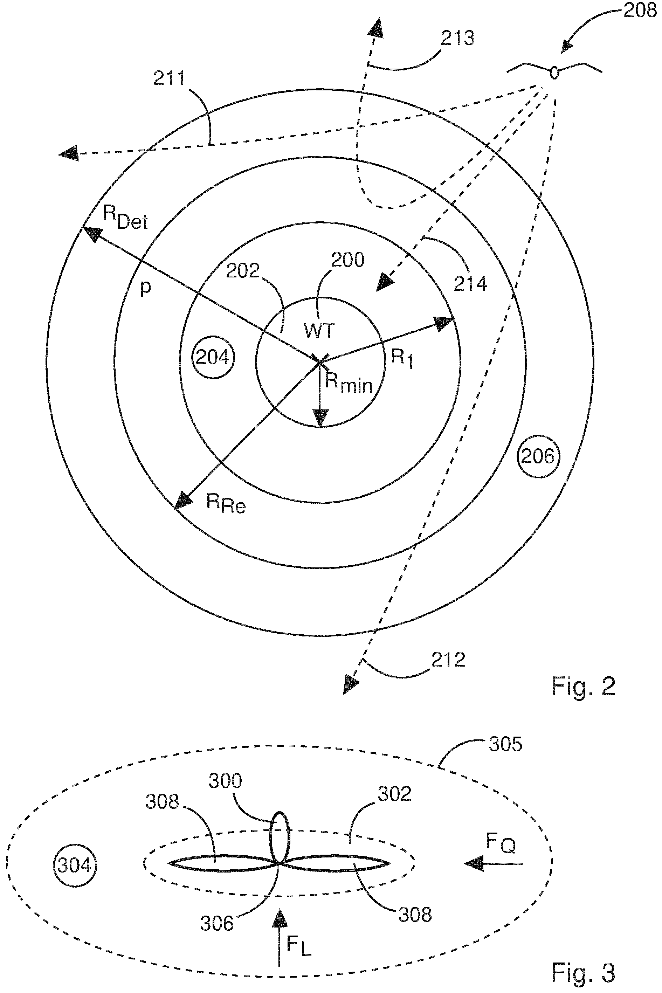

**Figur 2** veranschaulicht eine Windenergieanlage 200, die auch als WT bezeichnet werden kann, die in Figur 2 nur den Mittelpunkt der nachfolgend erläuterten Bereiche bildet.

Unmittelbar um die Windenergieanlage 200 ist ein Kreis mit dem Radius $R_{min}$ eingezeichnet, der einen Gefahrenbereich 202 veranschaulicht. Dieser Gefahrenbereich 202 ist unmittelbar um die Windenergieanlage 200 gelegt und sein Radius $R_{min}$ entspricht dem Radius des Rotors der Windenergieanlage, der in Figur 2 aber nicht dargestellt ist. Figur 1 zeigt einen Rotor 106, dessen Radius hier verwendet werden kann. Vorzugsweise ist der Radius $R_{min}$ des Gefahrenbereichs 202 etwas größer als der Radius des Rotors der Windenergieanlage, also des aerodynamischen Rotors der Windenergieanlage. Er kann zum Beispiel 10 % oder 20 % größer sein, oder auch 50 %.

Der Gefahrenbereich 202 und auch die weiteren nachfolgend noch erläuterten Bereiche der Figur 2 sind nur der Einfachheit halber als Kreise dargestellt. Figur 3 erläutert dazu weiter unten eine sinnvolle Abweichung.

Es ist nun vorgesehen, dass die Windenergieanlage 200 so gesteuert wird, dass sichergestellt wird, dass ihre Rotordrehzahl auf eine Schutzdrehzahl reduziert wird, bevor ein Vogel oder eine Fledermaus in den Gefahrenbereich 202 gelangt.

Um den Gefahrenbereich 202 befindet sich der Reaktionsbereich 204. Der Reaktionsbereich 204 ist durch den Radius $R_{Re}$ gekennzeichnet. Erreicht ein Vogel oder Fledermaus den Reaktionsbereich, wird vorgeschlagen, mit einer Reduzierung der Rotordrehzahl zu reagieren. Das kann schrittweise erfolgen, oder im Idealfall kontinuierlich je nach Abstand zum Gefahrenbereich 202. Das wird durch den Radius $R_1$ veranschaulicht. R1 kann somit als Entscheidungsgrenze verstanden werden, ab der die Drehzahlreduktion veranlasst wird. Der Einfachheit halber ist dieser Radius $R_1$, wie die übrigen Radien auch, in Bezug auf die Windenergieanlage 200 bzw. auf einen Mittelpunkt der Windenergieanlage 200 bezogen. Der Radius $R_1$ kann somit variieren zwischen dem Radius $R_{min}$, der den Gefahrenbereich 202 kennzeichnet, und dem Radius $R_{Re}$, der den Radius des Reaktionsbereichs 204 bezeichnet. Der Kreis mit dem Radius $R_1$ befindet sich somit in dem Reaktionsbereich 204. Bezugszeichen 204 soll also nicht andeuten, dass der Reaktionsbereich innerhalb des Kreises mit dem Radius $R_1$ ist, sondern er reicht bis zum Kreis mit dem Radius $R_{Re}$.

Gemäß einer Variante kann der Radius $R_1$ eine Bereichsgrenze eines Vorgefahrenbereichs kennzeichnen.

Weiterhin ist noch ein Erkennungsbereich 206 veranschaulicht. Der Erkennungsbereich ist somit durch den äußersten Kreis mit dem Rotorradius $R_{Det}$ gekennzeichnet. Innerhalb dieses Erkennungsbereichs 206 kann eine Vogel-Erfassungseinrichtung, wie die in Figur 1 gezeigte Vogel-Erfassungseinrichtung 120, einen Vogel oder Fledermaus erkennen und identifizieren. Damit kann ein Vogel oder Fledermaus bereits erkannt werden, bevor sie den Reaktionsbereich 204 bzw. den Kreis mit dem Radius $R_{Re}$ erreichen.

In der Figur 2 sind mehrere veranschaulichende Flugrouten eines exemplarisch gezeigten Vogels 208 eingezeichnet.

Bei der ersten Flugroute 211 fliegt der Vogel 208 in den Erfassungsbereich 206 ein. Der Vogel 208 wird dann identifiziert und seine Position fortlaufend erfasst. Zusätzlich kann vorgesehen sein, dass vorsorglich bereits eine erste Drehzahlreduzierung eingeleitet wird, bei der die Windenergieanlage ihre Betriebskennlinie ändert, also eine Drehzahl-Leistungs-kennlinie bzw. Drehzahl-Drehmoment-Kennlinie. Dadurch kann sich die Drehzahl reduzieren, ohne nennenswerte Reduzierung der erzeugten Leistung. Eine solche Drehzahlreduzierung ohne nennenswerte Reduzierung der Leistung ist natürlich nicht beliebig möglich, aber je nach Betriebssituation kann sie durchgeführt werden. Leistungsverluste ergeben sich dann nur im Rahmen der resultierenden Abweichung vom optimalen Betriebspunkt.

Gemäß der ersten Flugroute 211 erreicht der Vogel, der hier repräsentativ auch für eine mögliche Fledermaus steht, den Reaktionsbereich 204 nicht. Eine Drehzahlreduzierung bräuchte daher nicht zu erfolgen und die genannte Drehzahlreduzierung durch Veränderung der Betriebskennlinie ist insoweit auch nur eine optionale, vorsorgliche Maßnahme.

Bei der zweiten Flugroute 212 fliegt der Vogel nicht nur in den Erfassungsbereich 206 ein, sondern auch in den Reaktionsbereich 204. Da der Vogel aber im Wesentlichen in großem Abstand an der Windenergieanlage 200 vorbeifliegt, verlässt er gemäß dieser zweiten Flugroute 212 den Reaktionsbereich 204 auch bald wieder, und im Übrigen auch den Erkennungsbereich 206.

Dennoch erfolgt eine Reduzierung der Rotordrehzahl, sobald der Vogel 208 auf der zweiten Flugroute in den Reaktionsbereich 204 eindringt bzw. sobald der Vogel 208 den Kreis mit dem Radius $R_{Re}$ erreicht.

Es wird aber nur vorgeschlagen, die Rotordrehzahl etwas zu reduzieren und den weiteren Flugverlauf des Vogels 208 zu beobachten. Hier verlässt er den Reaktionsbereich 204 wieder, sodass die Drehzahl wieder auf die Drehzahl erhöht werden kann, die vorlag, bevor der Vogel 208 den Reaktionsbereich 204 erreicht hat.

Die dritte Flugroute 213 zeigt ebenfalls den Fall, bei dem der Vogel 208 in den Erkennungsbereich 206 einfliegt, außerdem dann auch in den Reaktionsbereich 204 einfliegt, dann aber umkehrt und den Reaktionsbereich 204 und danach auch den Erkennungsbereich 206 wieder verlässt.

Hier kann eine Steuerung der Windenergieanlage ganz ähnlich wie im Beispiel der zweiten Flugroute 212 erfolgen. Die Rotordrehzahl wird nämlich reduziert, sobald der Vogel 208 den Reaktionsbereich 204 erreicht und während der Vogel sich weiter der Windenergieanlage 200 und damit dem Gefahrenbereich 202 nähert, kann die Rotordrehzahl sukzessive weiter reduziert werden. In dem Moment, wo der Vogel gemäß der dritten Flugroute die Richtung ändert und wieder weiter von der Windenergieanlage 200 bzw. dem Gefahrenbereich 202 wegfliegt, kann die Drehzahl wieder erhöht werden.

Gemäß einer Option ist vorgesehen, neben der jeweiligen Position des Vogels, also der Vogelposition, auch seine Flugrichtung und Fluggeschwindigkeit zu berücksichtigen. Das würde bei der zweiten Flugroute und der dritten Flugroute zu unterschiedlichen Verhalten der Windenergieanlage führen können.

Bei der zweiten Flugroute 212 ist aufgrund der Flugrichtung erkennbar, dass der Vogel nicht auf die Windenergieanlage 200 bzw. den Gefahrenbereich 202 zufliegt, sodass selbst bei gleichem Abstand der Vogelposition zum Gefahrenbereich 202 eine geringere Reduzierung der Rotordrehzahl angemessen sein kann.

Stattdessen fliegt der Vogel gemäß der dritten Flugroute fast direkt auf den Gefahrenbereich 202 zu, sodass zunächst zu erwarten ist, dass der Vogel auch bald den Gefahrenbereich 202 erreicht. Die Zeit, in der er den Gefahrenbereich erreichen würde, kann berechnet oder zumindest abgeschätzt werden und innerhalb dieser Zeit muss die Rotordrehzahl auf eine Schutzdrehzahl reduziert werden können. Die Rotordrehzahl wird also umso mehr reduziert, je näher der Vogel 208 dem Gefahrenbereich 202 kommt.

In dem Moment, in dem der Vogel gemäß der dritten Flugroute 213 im Grunde abdreht und sich wieder entfernt, kann die Rotordrehzahl wieder erhöht werden.

Schließlich ist noch eine vierte Flugroute 214 eingezeichnet, die im Grunde die für den Vogel 208 gefährlichste Situation betrifft. Der Vogel 208 fliegt nämlich unmittelbar auf die Windenergieanlage 200 und damit den Gefahrenbereich 202 zu und erreicht den Gefahrenbereich 202 auch. Nur der besseren Übersichtlichkeit halber endet der gestrichelte Pfeil, der die vierte Flugroute 214 veranschaulicht, vor dem Gefahrenbereich 202. In dem Beispiel wird aber angenommen, dass der Vogel bis in den Gefahrenbereich hineinfliegt und die Steuerung der Rotordrehzahl, nämlich insbesondere die Reduzierung der Rotordrehzahl, erfolgt so, dass diese auf die Schutzdrehzahl reduziert wurde, kurz bevor der Vogel 208 den Gefahrenbereich 202 erreicht.

Die Windenergieanlage kann dann mit der Schutzdrehzahl weiterbetrieben werden, solange sich der Vogel im Gefahrenbereich befindet. Sobald er sich wieder entfernt, kann die Rotordrehzahl wieder erhöht werden. Entfernt sich der Vogel 208 aber so, dass er weiterhin in dem Reaktionsbereich 204 bleibt, so kann die Rotordrehzahl zwar je nach seiner Position, nämlich Abstand zum Gefahrenbereich, weiter erhöht werden, aber nicht auf die Drehzahl, die vorlag, bevor der Vogel den Reaktionsbereich 204 erreicht hat.

Die Windenergieanlage wird also weiterbetrieben, dabei mit wechselnder Drehzahl und diese wechselnde Drehzahl ist geringer als wenn der Vogel außerhalb des Reaktionsbereichs wäre (optional käme auch in Betracht, dass trotz vorreduzierter Drehzahl die Windenergieanlage, die als WEA abgekürzt werden kann, abgeschaltet wird, sobald vorausberechnet ist, dass der Vogel in den Gefahrenbereich sehr wahrscheinlich einfliegen wird). Sobald der Vogel aber auch in diesem Beispiel den Reaktionsbereich wieder verlassen würde, würde die Windenergieanlage wieder mit ganz normaler Rotordrehzahl weiterbetrieben werden. Aufgrund des ständigen Nachführens der Rotordrehzahl basierend auf der Vogelposition ist es auch ohne weiteres möglich, sofort wieder die normale Rotordrehzahl einzunehmen, sobald der Vogel den Reaktionsbereich 204 verlassen hat.

Mit der vierten Flugroute kann noch eine Variante erläutert werden, wenn nämlich ein Vorgefahrenbereich vorgesehen ist und der Radius $R_1$ die Bereichsgrenze des Vorgefahrenbereichs kennzeichnet. In dem Fall für das Erreichen des Reaktionsbereichs zu einer ersten Reduzierung der Rotordrehzahl auf eine Reaktionsdrehzahl. Der Vogel 208 fliegt aber weiter und erreicht die Bereichsgrenze des Vorgefahrenbereichs, durch $R_1$ gekennzeichnet, was zu einem weiteren Reduktionsschritt führt, bei dem die Rotordrehzahl auf die Schutzdrehzahl reduziert wird.

**Figur 3** zeigt schematisch in einer Draufsicht eine Windenergieanlage 300 mit Rotorblättern 308, die einen Rotor 306 definieren. Hier wurde erkannt, dass ein angedeuteter Gefahrenbereich 302, anders als veranschaulichend in Figur 2 gezeigt, an den Rotor 306 angepasst ist, und daher nicht kreisrund ist, wie in dem veranschaulichten Beispiel für den Gefahrenbereich 202 in der Figur 2.

Somit kann sich ein Vogel, der sich gemäß einer Längsflugrichtung $F_L$ der Windenergieanlage 300 nähert, näher herankommen, bevor er den Gefahrenbereich 302 erreicht, als dies bei einer Querflugrichtung $F_Q$ der Fall wäre.

Entsprechend kann dies und damit die Ausrichtung der Windenergieanlage 300 bei der Steuerung der Rotordrehzahl in Abhängigkeit von der Vogelposition berücksichtigt werden.

So kann auch der Reaktionsbereich, der hier als Reaktionsbereich 304 eingezeichnet ist, entsprechend angepasst sein. Der Reaktionsbereich 304 weist dazu einen Bereichsrand 305 auf, der ebenfalls nicht kreisrund ist, sondern eher eine ovale Form oder eine Ellipsenform aufweist.

Der in Figur 2 gezeigte Erkennungsbereich 206 kann natürlich weiterhin kreisrund sein, denn der hängt von der Reichweite der Vogelerfassungseinrichtung (siehe Vogelerfassungseinrichtung 220 der Figur 1) ab und die sollte idealerweise in alle Richtungen eine gleiche Reichweite haben. Allerdings kommt besonders in Betracht, dass je nach Wetterbedingungen die Reichweite einer solchen Vogel-Erfassungseinrichtung nicht unbedingt in alle Richtungen gleich ist.

**Figur 4** veranschaulicht ein Ablaufdiagramm 400 eines vorgeschlagenen Verfahrens zum Steuern einer Windenergieanlage in Abhängigkeit eines erfassten Vogels oder einer Fledermaus.

Zu Beginn des Verfahrens erfolgt das Detektieren eines Vogels gemäß einem Detektionsschritt 402. Gemäß dem Detektionsschritt 402 wird versucht, einen Vogel zu erkennen. Auch hier steht der Vogel ebenfalls auch repräsentativ für eine Fledermaus. Der Detektionsschritt 402 wird im Grunde durch eine Vogelerfassungseinrichtung ständig ausgeführt. Mit anderen Worten sucht eine solche Vogelerfassungseinrichtung ständig nach Vögeln bzw. gefährdeten Vögeln.

In einem Abfrageschritt 404 wird dann im Grunde ständig geprüft, ob ein relevanter Vogel erkannt wurde. Wenn das nicht der Fall ist, kehrt die Schleife zum Detektionsschritt 402 zurück, was nur veranschaulichen soll, dass die Suche nach einem Vogel ständig wiederholt wird.

Wird aber ein Vogel erkannt, setzt das Verfahren mit dem Identifikationsschritt 406 fort. Die Detektion gemäß Detektionsschritt 402 wird aber natürlich parallel auch fortgesetzt, um zu prüfen, ob sich weitere Vögel nähern.

Im Identifikationsschritt 406 wird zunächst die Art des Vogels spezifiziert. Die Art kann auch synonym als Spezies bezeichnet werden.

Nach der Erfassung der Vogelart im Identifikationsschritt 406 wird davon abhängig im Parametrierschritt 408 eine Parametrierung vorgenommen. Dazu wird der Reaktionsbereich (siehe Reaktionsbereich 204 der Figur 2 und Reaktionsbereich 304 der Figur 3) festgesetzt. Insbesondere wird ein Abstand eines Bereichsrandes des Reaktionsbereichs von einem Gefahrenbereich oder von der Windenergieanlage festgelegt. Hier fließt besonders ein, wie schnell der betreffende Vogel fliegen kann. Davon hängt nämlich ab, wie früh vorher eine etwaige Drehzahlreduzierung erfolgen muss. Kann der identifizierte Vogel sehr schnell fliegen, ist ein größerer Reaktionsbereich festzusetzen, andernfalls kann er geringer festgesetzt werden.

Außerdem kann eine später noch erläuterte Funktion, die die Rotordrehzahl in Abhängigkeit von der Position des Vogels einstellt, in Abhängigkeit von der identifizierten Vogelart parametriert werden.

Als nächster Schritt erfolgt eine Positionserfassung des Vogels im Positionsschritt 410. Die Position kann besonders mit der Vogel-Erfassungseinrichtung erkannt werden und kann somit bereits auch schon im Detektionsschritt 402 miterfasst werden. Im Positionsschritt 410 wird hier nochmal verdeutlicht, dass diese ausdrückliche Position des Vogels, also die Bestimmung der Vogelposition, ein wichtiges Element ist, und auch ständig wiederholt, also aktualisiert werden muss.

Basierend auf der so erkannten Position erfolgt im Vergleichsschritt 412 ein Vergleich zwischen erfasster Position und Reaktionsbereich. Es wird also überprüft, ob die Vogelposition den Reaktionsbereich erreicht hat oder nicht.

Das wird im Auswerteschritt 414 ausgewertet. Hat der Vogel den Reaktionsbereich (noch) nicht erreicht, geht das Verfahren zum Kennlinienwechselschritt 416. Im Kennlinienwechselschritt 416 wird eine Betriebskennlinie von einer Normalkennlinie, die dort als Drehzahl-Leistungs-Normalkennlinie n-P-N symbolisiert wird, in eine reduzierte Betriebskennlinie gewechselt werden, nämlich eine Vogelschutzkennlinie, die als reduzierte Drehzahl-Leistungs-Kennkennlinie n-P-R symbolisiert ist.

Damit wird ein Betriebsmodus mit reduzierter Drehzahl gewählt, bei dem aber nur wenig Leistungsreduzierung erfolgt. Ein solcher Kennlinienwechselschritt 416 kann aber auch unterbleiben, besonders dann, wenn das aufgrund von Randbedingungen nicht oder nicht stabil möglich ist.

Jedenfalls geht das Verfahren dann zurück zum Positionsschritt 410. Das würde auch dann passieren, wenn der Kennlinienwechselschritt 416 ausgelassen werden würde.

Mit dem Rückkehren zum Positionsschritt 410 soll symbolisiert werden, dass dann weiterhin, insbesondere ständig, die Vogelposition erfasst wird.

Wird im Auswerteschritt 414 festgestellt, dass der Vogel den Reaktionsbereich erreicht hat, so geht das Verfahren über zum Drehzahleinstellschritt 418. In dem Drehzahleinstellschritt 418 erfolgt dann eine Einstellung der Rotordrehzahl in Abhängigkeit von der Vogelposition. Dies ist durch die Gleichung n=f(Pos) veranschaulicht. Die Rotordrehzahl wird dabei ständig in Abhängigkeit von der Vogelposition eingestellt. Zunächst bedeutet das natürlich, dass die Rotordrehzahl reduziert wird, wenn der Vogel nämlich gerade in den Reaktionsbereich eingedrungen ist. Es kann aber auch bedeuten, dass dann, wenn sich der Vogel wieder von der Windenergieanlage entfernt, die Rotordrehzahl wieder erhöht wird.

Die verwendete Funktion hängt dabei aber von der Vogelart, also von der Spezies bzw. der vorgenommenen Vogelkategorisierung ab. Das ist durch [Spe] verdeutlicht. Diese in dem Drehzahleinstellschritt 418 symbolisch dargestellte Funktion ist diejenige, die gemäß dem Parametrierschritt 408 eingestellt wurde. Mit anderen Worten wurde diese von der Position abhängige Drehzahlfunktion somit gemäß dem Parametrierschritt 408 in Abhängigkeit von der erkannten Vogelart parametriert.

Besonders kann eine solche Parametrierung in Abhängigkeit von der Vogelart bedeuten, dass die einzustellende Rotordrehzahl n bei gleicher Vogelposition, also gleichem Abstand, umso geringer ist, umso schneller der Vogel gemäß der identifizierten Art grundsätzlich ist.

Nach diesem Drehzahleinstellschritt 418 kehrt eine Schleife zurück zum Positionsschritt 410, in dem ständig die Position aufgenommen bzw. aktualisiert wird. Entsprechend kann auch ständig die Rotordrehzahl gemäß Drehzahleinstellschritt 418 eingestellt werden. Entfernt sich der Vogel aber wieder, insbesondere so weit, dass er den Reaktionsbereich verlässt, wird dies auch in dem Auswerteschritt 414 erkannt und entsprechend der Drehzahleinstellschritt 418 gar nicht mehr angesteuert. In diesem Fall ist nämlich die Rotordrehzahl auch schon auf ihrem Normalwert, denn auf diesem wurde sie quasi in dem Moment eingestellt, als der Vogel den Bereichsrand des Reaktionsbereichs erreicht hat, in diesem Fall nämlich von innen.

Der besseren Übersichtlichkeit halber wurde in dem Ablaufdiagramm 400 nicht mehr aufgenommen, dass nur noch die Schleife aus dem Detektionsschritt 402 und dem Abfrageschritt 404 durchgeführt wird, wenn der erkannte Vogel sogar außerhalb des Erkennungsbereichs der Vogelerfassungseinrichtung ist.

Im Rahmen der Erfindung wurden besonders nachfolgende Aspekte erkannt bzw. werden vorgeschlagen.

Vogelerkennungssysteme haben eine definierte Reichweite, in denen sie relevante Vögel detektieren können. Diese wird in Figur 2 mit $R_{Det}$ bezeichnet.

Es wurde erkannt, dass der Radius $R_{max}$, den ein Vogel unterschreiten muss, um in den Reaktionsbereich einzudringen von der artspezifischen Fluggeschwindigkeit oder realen Fluggeschwindigkeit und der Zeitdauer abhängt, die die Windenergieanlage, die manchmal auch als Windkraftanlage bezeichnet wird, benötigt um den Trudelbetrieb zu erreichen. Dieser kann durch folgende Formel angegeben werden:

$$R_{\max}=v_{Art}\cdot t_{trudel}+D/2 \tag{4-1}$$

darin ist

- $v_{Art}$ die artspezifische Fluggeschwindigkeit
- $t_{trudel}$ die Zeit bis zum Austrudeln/ zur Abregelung des Rotors
- D der Rotordurchmesser der Anlage
- $R_{max}$ bezeichnet auch den äußeren Rand des Reaktionsbereichs und kann dem oben beschriebenen Radius $R_{RE}$ des Reaktionsbereichs 204 entsprechen.

Bisher war bekannt, bei Erkennen eines gefährdeten Vogels einen Anlagenstopp einzuleiten, besonders mit den folgenden Schritten:
Der Abbremsvorgang wird initiiert, sobald der Abstand zwischen Vogel und Windkraftanlage kleiner ist als $R_{max}$ und die

Windkraftanlage stoppt vollständig.

Sobald der Vogel $R_{min}$ erreicht, muss die Blattspitzengeschwindigkeit bspw. kleiner sein als 30 km/h (8.3 m/s). Das kann besonders ein Beispiel für einen Rotmilan sein, und es kommen für andere Vogelarten andere Werte in Betracht. $R_{min}$ bezeichnet den inneren Rand des Reaktionsbereichs und den äußeren Rand des Gefahrenbereichs.

Ein einmal eingeleiteter Anlagenstopp kann während des Stoppens nicht aufgehoben werden/abgebrochen werden. Die Windkraftanlage reduziert die Drehzahl bis zum Stopp und Netztrennung mit entsprechenden Wartezeiten vor dem Wiedereinschalten.

Dabei wurde aber folgendes Problem erkannt: Vögel fliegen selten bis zur Windkraftanlage, sondern drehen im Reaktionsbereich bei und verlassen diesen auch wieder. Die Windkraftanlage vollendet den Stopp trotzdem vollständig, sodass ca. 97 % der Stopps nicht notwendig wären.

Um das zu lösen wird ein Betriebsmodus zur Vermeidung des Anlagenstopps vorgeschlagen. Besonders wird dazu Folgendes vorgeschlagen:

Anstelle einen Stopp einzuleiten soll bei Vogelerkennung ein bestimmter Betriebsmodus ausgewählt werden.

Der Betriebsmodus zeichnet sich dadurch aus, dass automatisch, und möglichst ohne Zeitverzug, von einem Betriebsmodus zum Schutz eines Vogels, der als "OM Artenschutz" bezeichnet werden kann, in den originalen Modus, also einen Normalmodus, zurückgeschaltet werden kann. Ein solcher Normalmodus kann besonders darin bestehen, dass eine Normalkennlinie als Betriebskennlinie verwendet wird und/oder keine Reduzierung der Rotordrehzahl vorliegt.

Stillstandzeiten und Lasterhöhungen durch den Stopp können dadurch vermieden werden.

Die Richtung, aus der sich der Vogel nähert, soll vorzugsweise mit einbezogen werden, sodass in der genannten Formel (4-1) ($R_{max}=v_{Art} \cdot t_{trudel}+D/2$) D = 0, oder D annähernd 0 gilt, wenn der Vogel längs (mit oder gegen den Wind) auf die Windkraftanlage fliegt. Das ist in Figur 3 veranschaulicht.

Unter anderem werden zwei verschiedene Betriebsweisen als Alternativen vorgeschlagen:

Dabei liegt eine Reduktion von $R_{max}$ und $R_{min}$ bei Erreichen einer kleineren Zeit $t_{trudel}$ als Gedanke zu Grunde. Das kann erreicht werden durch Veränderung von physikalischen Eigenschaften (Massenträgheit, Reaktionszeit, Pitchgeschwindigkeit, ...) oder durch einen angepassten Betriebsmodus.

Als Variante a) wird vorgeschlagen: Sobald ein Vogel in den Reaktionsbereich eindringt, wird die Blattspitzengeschwindigkeit auf einen unkritischen Wert (artspezifisch, im Bereich 50-120 km/h bzw. 13.8 m/s bis 33.3 m/s) aber mindestens die Einschaltdrehzahl reduziert. Dringt der Vogel in den Gefahrenbereich ein, wird in einen Trudelmodus geschaltet, der eine minimale Drehzahl vorgibt aber nicht den Stopp-Status auslöst. Insbesondere der letzte Bremsvorgang erfolgt mit weniger Last und schneller als ein Anlagenstopp von Nenndrehzahl aus.

Als Variante b) wird Folgendes vorgeschlagen: Sobald ein Vogel in den Reaktionsbereich eindringt, wird die Blattspitzengeschwindigkeit stufenlos und in Abhängigkeit der Vogeldistanz, also dem Abstand des Vogels, bzw. der Vogelposition zum Gefahrenbereich, abgesenkt. Unterschreitet ein Vogel den Abstand $R_{max}$ zur Windkraftanlage und fliegt mit unverminderter aber maximaler Geschwindigkeit auf die Windkraftanlage zu, bleibt der Windkraftanlage eine maximale Zeit von

$$t_{trudel}=(R_{max}-R_{min})/v_{Art} \tag{4-2}$$

um eine unkritische Rotorblattspitzengeschwindigkeit zu erreichen. Daraus und aus der ersten Ableitung des Zusammenhangs aus Winkelposition und Rotationsbeschleunigung berechnet sich die maximal nötige Beschleunigung des Rotors $\alpha_{min}$.

$$\phi=1/2 \cdot \alpha \cdot t^2+\omega_{nenn} \cdot t+\phi_0 \tag{4-3}$$

$$d\phi/dt= \alpha \cdot t+ \omega_{nenn} \tag{4-4}$$

$$\alpha_{min}=(d\phi/dt-\omega_{nenn})/t \tag{4-5}$$

Darin sind

- $\phi_0, \phi$ die Winkelposition des Rotors zu Beginn/ nach Zeit t
- $\omega_{nenn}$ die Nennwinkelgeschwindigkeit
- $d\phi/dt$ die Ziel-Winkelgeschwindigkeit, die die Windkraftanlage nach Verstreichen von $t_{trudel}$ erreicht haben soll
- $\alpha_{min}$ die notwendige (negative) Beschleunigung des Rotors.

Aus Formel (4-5) lässt sich eine Kennlinie ableiten, mit der die Drehzahl sukzessive reduziert wird. Demnach hängt die zu erreichende Drehzahl $d\phi/dt$ von der Distanz des Vogels $Rv$ zur Windkraftanlage ab:

$$d\phi/dt = ((R_{max} - R_v) \cdot \alpha_{min})/\, v_{Art} + \omega_{nenn} \qquad\qquad (4\text{-}6)$$

Die Distanz des Vogels $R_v$ kann durch den Radius $R_1$ der Figur 2 veranschaulicht werden.

Je nachdem, wie gut das Vogelerkennungssystem bzw. die Vogelerfassungseinrichtung und die Schnittstelle zur Anlagensteuerung sind, kann $v_{Art}$ durch die aktuelle Fluggeschwindigkeit des Vogels ersetzt werden. Alternativ kann die maximale Fluggeschwindigkeit oder eine andere typische Fluggeschwindigkeit der erkannten Vogelart verwendet werden.

Kann ein Rotor aufgrund seiner physikalischen Eigenschaften eine höhere Beschleunigung umsetzen, kann über den umgekehrten Weg die Reaktionsdistanz verringert werden und somit für einen längeren Zeitraum der leistungsoptimierte Betrieb, der auch als Normalbetrieb bezeichnet werden kann, angewendet werden.

Kombinationen aus Varianten a) und b) sind möglich, beispielsweise wie folgt:

- Zwischen $R_{max}$ und $R_1$ erfolgt eine stufenlose Regelung,
- Zwischen $R_1$ und $R_{min}$ wird eine konstant niedrige minimale Drehzahl implementiert und/oder
- bei einer Distanz, also bei einer Vogelposition mit einem Abstand zur Windenergieanlage kleiner $R_{min}$ erfolgt ein Trudeln.

Die vorgeschlagenen Aspekte sind geeignet für eine

- Betriebsführung der Windkraftanlage an Standorten mit der Anforderung des Vogelschutzes und einem installierten Vogelerkennungssystem und eine
- Betriebsführung der Windkraftanlage an Standorten mit Fledermausaktivität, an dem bisher eine Abschaltung der Windkraftanlage durchgeführt wurde unter der Voraussetzung, dass ein Erkennungssystem installiert ist.

Die vorgeschlagenen Aspekte sind besonders für folgende Bereiche vorgesehen:
Errichtung und Betrieb von Windenergieanlagen an Standorten, an denen aus Artenschutzgründen keine Genehmigung erteilt werden würde oder Standorte an denen der Anlagenbetrieb unwirtschaftlich durch hohe Abschaltauflagen bzw. Stillstandzeiten werden würde.

Reduktion der Stillstandzeiten der Windkraftanlage bei sich nähernden Vögeln und damit

- Senkung der Lasten durch Vermeidung häufiger Stopps,
- Senkung der Ertragsausfälle bzw. Steigerung der Verfügbarkeit der Anlage und
- Schnellere Startfähigkeit der Windkraftanlage um wieder Nennleistung zu erreichen.

Mit den vorgeschlagenen Aspekten können folgende Lösungen erreicht werden:

- Reduktion der Stillstandzeiten der Windenergieanlage
- Reduktion der Lastzyklen die durch zusätzliche Anlagentopps- und Starts entstehen
- Erhöhen der Startfähigkeit sobald der Vogel den Gefahren/Reaktionsbereich verlässt
- Umkehr des Windkraftanlagenabbremsvorganges, sollte der Vogel den Reaktionsbereich verlassen, ohne in den Gefahrenbereich einzudringen.

**Patentansprüche**

1. Verfahren zum Steuern einer Windenergieanlage, die einen Rotor mit in ihrem Blattwinkel verstellbaren Rotorblättern und mit einem Rotordurchmesser aufweist, wobei der Rotor mit einer veränderlichen Rotordrehzahl betreibbar ist, und ein Bereich, in dem sich die Rotorblätter bewegen, einen Gefahrenbereich für Vögel und Fledermäuse bildet, und das Verfahren umfasst die Schritte:

   - Prüfen auf einen sich der Windenergieanlage nähernden Vogel oder Fledermaus als gefährdeten Vogel, und, wenn ein gefährdeter Vogel erkannt wurde,
   - Erfassen einer Vogelposition als aktuelle Position des erkannten gefährdeten Vogels und
   - Steuern der Rotordrehzahl in Abhängigkeit von der Vogelposition in Bezug auf die Windenergieanlage, wobei

- die Rotordrehzahl in mehreren Stufen oder kontinuierlich mit abnehmendem Abstand der Vogelposition zur Windenergieanlage reduziert wird, **dadurch gekennzeichnet, dass**
- die Rotordrehzahl gemäß einer Drehzahl-Abstandsfunktion vorgegeben wird, wobei die Drehzahl-Abstandsfunktion eine Drehzahl als Funktion von einem Abstand des gefährdeten Vogels zum Gefahrenbereich bezeichnet.

2. Verfahren nach Anspruch 1, **dadurch gekennzeichnet, dass**

- von dem gefährdeten Vogel seine Vogelart oder andere Kategorie identifiziert wird,
- ein Reaktionsbereich um die Windenergieanlage in Abhängigkeit von der identifizierten Vogelart oder anderen Kategorie festgelegt wird, wobei der Reaktionsbereich einen Bereichsrand aufweist und der Reaktionsbereich dadurch definiert ist, dass die Windenergieanlage die Rotordrehzahl auf eine Trudeldrehzahl, eine Schutzdrehzahl oder den Wert null, reduzieren kann, bevor zu erwarten ist, dass der gefährdete Vogel der identifizierten Vogelart vom Rand des Reaktionsbereichs den Gefahrenbereich erreicht,
- die Rotordrehzahl reduziert wird, sobald der gefährdete Vogel in den Reaktionsbereich einfliegt, und
- die Rotordrehzahl umso weiter reduziert wird, je näher der gefährdete Vogel dem Gefahrenbereich kommt, ohne dass die Windenergieanlage abgeschaltet oder angehalten wird.

3. Verfahren nach Anspruch 1 oder 2, **dadurch gekennzeichnet, dass**

- eine Anzahl sich der Windenergieanlage nähernder Vögel oder Fledermäuse als Anzahl gefährdeter Vögel identifiziert wird und
- das Steuern der Windenergieanlage, insbesondere das Steuern der Rotordrehzahl in Abhängigkeit von der identifizierten Anzahl gefährdeter Vögel durchgeführt wird.

4. Verfahren nach einem der vorstehenden Ansprüche, **dadurch gekennzeichnet, dass**

- die Rotordrehzahl und/oder die Drehzahl-Abstandsfunktion eingestellt oder ausgewählt wird in Abhängigkeit von

  - einer Jahreszeit,
  - einer Tageszeit und/oder
  - einer bzw. der identifizierten Vogelart.

5. Verfahren nach einem der vorstehenden Ansprüche, **dadurch gekennzeichnet, dass**

- die Rotordrehzahl wieder erhöht wird, wenn sich der gefährdete Vogel wieder vom Gefahrenbereich entfernt und sich noch im Reaktionsbereich befindet.

6. Verfahren nach einem der vorstehenden Ansprüche, **dadurch gekennzeichnet, dass**

- die Windenergieanlage mit einer Schutzdrehzahl betrieben wird und Leistung erzeugt, solange sich der gefährdete Vogel im Gefahrenbereich befindet, wobei
- die Schutzdrehzahl eine Rotordrehzahl ist, die für den gefährdeten Vogel als ungefährlich gilt, wenn er sich im Gefahrenbereich aufhält, und wobei insbesondere
- die Schutzdrehzahl in Abhängigkeit von der identifizierten Vogelart festgelegt wird.

7. Verfahren nach einem der vorstehenden Ansprüche, **dadurch gekennzeichnet, dass**

- die Rotordrehzahl auf eine bzw. die Schutzdrehzahl reduziert wird, die für den gefährdeten Vogel als ungefährlich gilt, wenn der gefährdete Vogel in einen bzw. den Reaktionsbereich einfliegt,
- die Rotordrehzahl weiter auf null oder eine Trudeldrehzahl reduziert wird, wenn der gefährdete Vogel in einen reduzierten Vorgefahrenbereich einfliegt, der eine Bereichsgrenze aufweist, die innerhalb des Reaktionsbereichs, aber außerhalb des Gefahrenbereichs liegt, und
- die Windenergieanlage mit dieser Schutzdrehzahl weiterbetrieben wird, und insbesondere dabei Leistung erzeugt, bis der Vogel den Vorgefahrenbereich erreicht, wobei insbesondere
- die Reaktionsdrehzahl und/oder die Schutzdrehzahl in Abhängigkeit von der Vogelart des gefährdeten Vogels vorgegeben wird.

8.  Verfahren nach einem der vorstehenden Ansprüche, **dadurch gekennzeichnet, dass**

    - die Windenergieanlage, solange sie nicht mit Nenndrehzahl und Nennleistung betrieben wird, mit einer Betriebskennlinie betrieben wird, bei der eine einzustellende elektrische Leistung oder ein einzustellendes Generatormoment in Abhängigkeit von der Rotordrehzahl vorgegeben wird, wobei
    - eine Normalkennlinie als Betriebskennlinie verwendet wird, wenn kein sich der Windenergieanlage nähernder gefährdeter Vogel erkannt wurde, und
    - eine Vogelschutzkennlinie als Betriebskennlinie verwendet wird, die im Vergleich zur Normalkennlinie bei jeweils gleichen Werten der Rotordrehzahl höhere Werte der Leistung bzw. des Generatormomentes aufweist, wenn

        - ein sich der Windenergieanlage nähernder gefährdeter Vogel erkannt wurde,
        - ein gefährdeter Vogel in einem Bereich außerhalb eines bzw. des Reaktionsbereichs erkannt wurde, und/oder wenn
        - eine hohe, insbesondere überdurchschnittliche Wahrscheinlichkeit besteht, dass ein gefährdeter Vogel in den Reaktionsbereich einfliegt, wobei vorzugsweise

    - der Reaktionsbereich in Abhängigkeit von der Vogelschutzkennlinie eingestellt wird.

9.  Verfahren nach einem der vorstehenden Ansprüche, **dadurch gekennzeichnet, dass**

    - die Rotordrehzahl, wenn ein sich der Windenergieanlage nähernder gefährdeter Vogel erkannt wurde,

        - durch Erhöhen des Generatormomentes reduziert wird und/oder
        - durch Verstellen der Blattwinkel der Rotorblätter reduziert wird.

10. Verfahren nach einem der vorstehenden Ansprüche, **dadurch gekennzeichnet, dass**

    - die Reduzierung der Rotordrehzahl eingestellt wird in Abhängigkeit von

        - einer erfassten Fluggeschwindigkeit des erkannten gefährdeten Vogels, und/oder
        - einer typischen, insbesondere maximalen Fluggeschwindigkeit der Vogelart des erkannten gefährdeten Vogels, und/oder
        - einer erfassten Flugrichtung des erkannten gefährdeten Vogels und/oder
        - einer geschätzten Mindestannäherungszeit, die der erkannte gefährdete Vogel erwartungsgemäß von seiner aktuellen Vogelposition aus wenigstens benötigt, um den Gefahrenbereich zu erreichen.

11. Verfahren nach einem der vorstehenden Ansprüche, **dadurch gekennzeichnet, dass**

    - die Windenergieanlage mit einer variablen Sicherheitsdrehzahl betrieben wird, die eine Drehzahl bezeichnet, die ständig der aktuellen Vogelposition angepasst wird, wobei
    - die Sicherheitsdrehzahl so gewählt wird, dass die Rotordrehzahl ausgehend von der Sicherheitsdrehzahl auf die Schutzdrehzahl oder eine Trudeldrehzahl in der Zeit reduziert werden kann, die der gefährdete Vogel von seiner aktuellen Vogelposition erwartungsgemäß wenigstens bis zum Gefahrenbereich benötigt, wobei insbesondere
    - die Sicherheitsdrehzahl so gewählt wird, dass das Reduzieren der Rotordrehzahl von der Sicherheitsdrehzahl auf die Schutzdrehzahl bzw. Trudeldrehzahl ohne Notbremsung und mit fortgesetztem Betrieb bei fortgesetzter Leistungserzeugung gewährleistet ist.

12. Verfahren nach einem der vorstehenden Ansprüche, **dadurch gekennzeichnet, dass**

    - die Rotordrehzahl,
    - eine bzw. die Drehzahl-Abstandsfunktion,
    - eine bzw. die Schutzdrehzahl, und/oder
    - ein bzw. der Reaktionsbereich,

    ausgewählt wird in Abhängigkeit von wenigstens einem Kriterium aus der Liste aufweisend

- eine Sichtweite in der Umgebung der Windenergieanlage, insbesondere im Reaktionsbereich der Windenergieanlage,
- eine landwirtschaftliche Tätigkeit in der Umgebung der Windenergieanlage, insbesondere im Bereich von bis zu 10 km, insbesondere bis zu 5km Abstand zur Windenergieanlage,
- einer Thermik in der Umgebung der Windenergieanlage, insbesondere im Bereich von bis zu 10 km, insbesondre bis zu 5km Abstand zur Windenergieanlage,
- einer Vorzugsflugrichtung des gefährdeten Vogels, und
- eine Position der Windenergieanlage in Bezug auf ein Habitat und/oder Jagdgebiet des gefährdeten Vogels.

13. Verfahren nach einem der vorstehenden Ansprüche, **dadurch gekennzeichnet, dass**

- im Betrieb der Windenergieanlage Verhalten gefährdeter Vögel aufgezeichnet werden,
- aus den aufgezeichneten Verhalten Verhaltensmuster abgeleitet werden, insbesondere jeweils für eine identifizierte Vogelart, und
- die Windenergieanlage, insbesondere

- die Rotordrehzahl,
- eine bzw. die Drehzahl-Abstandsfunktion,
- eine bzw. die Schutzdrehzahl, und/oder
- ein bzw. der Reaktionsbereich,

in Abhängigkeit von dem abgeleiteten Verhaltensmuster gesteuert wird.

14. Verfahren nach einem der vorstehenden Ansprüche, **dadurch gekennzeichnet, dass**

- Reduzierungen der Rotordrehzahl, insbesondere nach Anzahl, Amplitude und/oder Dauer aufgezeichnet werden und
- eine Lebensdauerberechnung für die Windenergieanlage in Abhängigkeit von den aufgezeichneten Reduzierungen durchgeführt oder angepasst wird.

15. Windenergieanlage, die einen Rotor mit in ihrem Blattwinkel verstellbaren Rotorblättern und mit einem Rotordurchmesser aufweist, wobei der Rotor mit einer veränderlichen Rotordrehzahl betreibbar ist, und ein Bereich, in dem sich die Rotorblätter bewegen, einen Gefahrenbereich für Vögel und Fledermäuse bildet, wobei die Windenergieanlage dazu vorbereitet ist, ein Verfahren mit folgenden Schritten auszuführen:

- Prüfen auf einen sich der Windenergieanlage nähernden Vogel oder Fledermaus als gefährdeten Vogel, und, wenn ein gefährdeter Vogel erkannt wurde,
- Erfassen einer Vogelposition als aktuelle Position des erkannten gefährdeten Vogels und
- Steuern der Rotordrehzahl in Abhängigkeit von der Vogelposition in Bezug auf die Windenergieanlage, wobei

- die Rotordrehzahl in mehreren Stufen oder kontinuierlich mit abnehmendem Abstand der Vogelposition zur Windenergieanlage reduziert wird, **dadurch gekennzeichnet, dass**
- die Rotordrehzahl gemäß einer Drehzahl-Abstandsfunktion vorgegeben wird, wobei die Drehzahl-Abstandsfunktion eine Drehzahl als Funktion von einem Abstand des gefährdeten Vogels zum Gefahrenbereich bezeichnet.

16. Windenergieanlage nach Anspruch 15, **dadurch gekennzeichnet, dass**

- sie eine Vogelerfassungseinrichtung aufweist, zum Erfassen eines Vogels oder einer Fledermaus, insbesondere nach Position und/oder Art, und/oder dass
- die Windenergieanlage, die dazu insbesondere eine Steuereinrichtung aufweist, dazu vorbereitet ist, ein Verfahren nach einem der Ansprüche 1 bis 14 auszuführen.

**Claims**

1. Method for controlling a wind power installation which has a rotor having rotor blades that are adjustable in terms of their blade angle, and having a rotor diameter, wherein the rotor is able to be operated at a variable rotor rotating speed; and a region in which the rotor blades move forms a danger zone for birds and bats, the method comprising the following steps:

- checking whether a bird or bat approaching the wind power installation is an endangered bird; and if an endangered bird has been identified
- detecting a bird position as the current position of the endangered bird identified; and
- controlling the rotor rotating speed as a function of the bird position in relation to the wind power installation; wherein

- the rotor rotating speed is reduced in multiple stages or continuously as the distance of the bird position from the wind power installation decreases, **characterized in that**
- the rotor rotating speed is predefined according to a rotating speed/distance function, wherein the rotating speed/distance function defines a rotating speed as a function of a distance of the endangered bird from the danger zone.

2. Method according to Claim 1, **characterized in that**

- the bird species or another category of the endangered bird is identified;
- a response region about the wind power installation is established as a function of the identified bird species or other category, wherein the response region has a regional periphery and the response region is defined **in that** the wind power installation can reduce the rotor rotating speed to a coasting rotating speed, a protective rotating speed, or to zero, before it is to be anticipated that the endangered bird of the bird species identified reaches the danger zone from the periphery of the response region;
- the rotor rotating speed is reduced as soon as the endangered bird flies into the response region; and
- the rotor rotating speed is reduced further the closer the endangered bird gets to the danger zone, without the wind power installation being shut down or stopped.

3. Method according to Claim 1 or 2, **characterized in that**

- a number of birds or bats approaching the wind power installation is identified as the number of endangered birds; and
- the controlling of the wind power installation, in particular the controlling of the rotor rotating speed, is carried out as a function of the number of endangered birds identified.

4. Method according to one of the preceding claims, **characterized in that**

- the rotor rotating speed and/or the rotating speed/distance function is set or selected as a function of

- a season;
- a time of day; and/or
- a or the bird species identified.

5. Method according to one of the preceding claims, **characterized in that**

- the rotor rotating speed is increased again when the endangered bird removes itself from the danger zone and is still situated in the response region.

6. Method according to one of the preceding claims, **characterized in that**

- the wind power installation is operated at a protective rotating speed and generates output as long as the endangered bird is situated in the danger zone, wherein
- the protective rotating speed is a rotor rotating speed which is considered to pose no risk to the endangered bird when the latter is in the danger zone; and wherein in particular
- the protective rotating speed is established as a function of the bird species identified.

7. Method according to one of the preceding claims, **characterized in that**

- the rotor rotating speed is reduced to a or the protective rotating speed which is considered to pose no risk to the endangered bird when the endangered bird flies into a or the response region;

- the rotor rotating speed is reduced further to zero or to a coasting rotating speed when the endangered bird flies into a reduced preliminary danger zone which has a zone boundary that lies within the response region but outside the danger zone; and

- the wind power installation continues to be operated at this protective rotating speed and in particular generates power in the process until the bird reaches the preliminary danger zone; wherein in particular

- the response rotating speed and/or the protective rotating speed are/is predefined as a function of the bird species of the endangered bird.

8. Method according to one of the preceding claims, **characterized in that**

- the wind power installation, as long as the latter is not operated at the nominal rotating speed and the nominal output, is operated using an operational characteristic curve in which an electrical output to be set, or a generator torque to be set, is predefined as a function of the rotor rotating speed; wherein

- a normal characteristic curve is used as the operational characteristic curve when no endangered bird approaching the wind power installation has been identified; and

- a bird-protecting characteristic curve which in comparison to the normal characteristic curve has higher output values or generator torque values at respectively identical rotor rotating speed values is used as the operational characteristic curve when

  - an endangered bird approaching the wind power installation has been identified;
  - an endangered bird has been identified in a region outside a or the response region; and/or when
  - there is a high, in particular higher-than-average, probability that an endangered bird flies into the response region; wherein preferably

- the response region is set as a function of the bird-protecting characteristic curve.

9. Method according to one of the preceding claims, **characterized in that**

- the rotor rotating speed, when an endangered bird approaching the wind power installation has been identified,

  - is reduced by increasing the generator torque; and/or
  - is reduced by adjusting the blade angles of the rotor blades.

10. Method according to one of the preceding claims, **characterized in that**

- the reduction of the rotor rotating speed is set as a function of

  - a detected flying speed of the endangered bird identified; and/or
  - a typical, in particular maximum, flying speed of the bird species of the endangered bird identified; and/or
  - a detected direction of flight of the endangered bird identified; and/or
  - an estimated minimum approach time which the endangered bird identified is anticipated to at least need to reach the danger zone from the current position of said bird.

11. Method according to one of the preceding claims, **characterized in that**

- the wind power installation is operated at a variable safe rotating speed which defines a rotating speed that is continually adapted to the current bird position; wherein

- the safe rotating speed is chosen such that the rotor rotating speed, proceeding from the safe rotating speed, can be reduced to the protective rotating speed or a coasting rotating speed in the time which the endangered bird is anticipated to need from the current bird position thereof at least to the danger zone; wherein in particular

- the safe rotating speed is chosen such that the reduction of the rotor rotating speed from the safe rotating speed to the protective rotating speed or the coasting rotating speed is ensured without emergency braking and with continued operation and continued output generation.

12. Method according to one of the preceding claims, **characterized in that**

- the rotor rotating speed;

- a or the rotating speed/distance function;
- a or the protective rotating speed; and/or
- a or the response region,

are/is selected as a function of at least one criterion from the list comprising

- a visibility range in the environment of the wind power installation, in particular in the response region of the wind power installation;
- an agricultural activity in the environment of the wind power installation, in particular in a range of up to 10 km, in particular up to 5 km, from the wind power installation;
- a thermal in the environment of the wind power installation, in particular in a range of up to 10 km, in particular up to 5 km, from the wind power installation;
- a preferred direction of flight of the endangered bird; and
- a position of the wind power installation in relation to a habitat and/or a hunting ground of the endangered bird.

13. Method according to one of the preceding claims, **characterized in that**

- behaviours of endangered birds are recorded in the operation of the wind power installation;
- behavioural patterns are derived from the recorded behaviours, in particular for a respective bird species identified; and
- the wind power installation, in particular

  - the rotor rotating speed;
  - a or the rotating speed/distance function;
  - a or the protective rotating speed; and/or
  - a or the response region,

are/is controlled as a function of the derived behavioural pattern.

14. Method according to one of the preceding claims, **characterized in that**

- reductions of the rotor rotating speed are recorded, in particular according to number, amplitude and/or duration; and
- a service life computation for the wind power installation is carried out or adapted as a function of the recorded reductions.

15. Wind power installation which has a rotor having rotor blades that are adjustable in terms of their blade angle, and having a rotor diameter, wherein the rotor is able to be operated at a variable rotor rotating speed; and a region in which the rotor blades move forms a danger zone for birds and bats, wherein the wind power installation is prepared to carry out a method comprising the following steps:

- checking whether a bird or bat approaching the wind power installation is an endangered bird; and if an endangered bird has been identified
- detecting a bird position as the current position of the endangered bird identified; and
- controlling the rotor rotating speed as a function of the bird position in relation to the wind power installation; wherein

  - the rotor rotating speed is reduced in multiple stages or continuously as the distance of the bird position from the wind power installation is reduced, **characterized in that**
  - the rotor rotating speed is predefined according to a rotating speed/distance function, wherein the rotating speed/distance function defines a rotating speed as a function of a distance of the endangered bird from the danger zone.

16. Wind power installation according to Claim 15, **characterized in that**

- said wind power installation has a bird detection installation for detecting a bird or a bat, in particular according to the position and/or species; and/or that
- the wind power installation, which to this end has in particular a control installation, is prepared to carry out a method according to one of Claims 1 to 14.

**Revendications**

1. Procédé de commande d'une éolienne, qui présente un rotor avec des pales de rotor à angle de pale ajustable et avec un diamètre de rotor, dans lequel le rotor peut fonctionner à une vitesse de rotation de rotor variable et une zone, dans laquelle les pales de rotor se déplacent, forme une zone de danger pour les oiseaux et les chauves-souris, et le procédé comprenant les étapes :

   - de vérification si un oiseau ou une chauve-souris s'approche de l'éolienne en tant qu'oiseau menacé et, si un oiseau menacé a été identifié,
   - de détection d'une position d'oiseau comme position actuelle de l'oiseau menacé identifié et
   - de commande de la vitesse de rotation de rotor en fonction de la position d'oiseau par rapport à l'éolienne, dans lequel

      - la vitesse de rotation de rotor est réduite par paliers ou en continu à mesure que la distance entre la position d'oiseau et l'éolienne diminue, **caractérisé en ce que**
      - la vitesse de rotation de rotor est prédéfinie selon une fonction de vitesse de rotation-distance, dans lequel la fonction de vitesse de rotation-distance désigne une vitesse de rotation en tant que fonction d'une distance entre l'oiseau menacé et la zone de danger.

2. Procédé selon la revendication 1, **caractérisé en ce que**

   - l'espèce ou une autre catégorie de l'oiseau menacé est identifiée,
   - une zone de réaction autour de l'éolienne est fixée en fonction de l'espèce d'oiseau identifiée ou d'une autre catégorie, dans lequel la zone de réaction présente un bord de zone et la zone de réaction est définie **en ce que** l'éolienne peut réduire la vitesse de rotation de rotor à une vitesse de rotation de vrille, à une vitesse de rotation de protection ou à la valeur nulle avant d'attendre que l'oiseau menacé de l'espèce identifiée atteigne la zone de danger depuis le bord de la zone de réaction,
   - la vitesse de rotation de rotor est réduite dès que l'oiseau menacé entre dans la zone de réaction, et
   - la vitesse de rotation de rotor continue à être réduite à mesure que l'oiseau menacé se rapproche de la zone de danger, sans que l'éolienne ne soit désactivée ou arrêtée.

3. Procédé selon la revendication 1 ou 2, **caractérisé en ce que**

   - un nombre d'oiseaux ou de chauves-souris s'approchant de l'éolienne est identifié comme le nombre d'oiseaux menacés ; et
   - la commande de l'éolienne, en particulier la commande de la vitesse de rotation de rotor, est effectuée en fonction du nombre identifié d'oiseaux menacés.

4. Procédé selon l'une quelconque des revendications précédentes, **caractérisé en ce que**

   - la vitesse de rotation de rotor et/ou la fonction de vitesse de rotation-distance sont réglées ou choisies en fonction

      - d'une saison,
      - d'une heure de la journée et/ou
      - d'une ou de l'espèce d'oiseaux identifiée.

5. Procédé selon l'une quelconque des revendications précédentes, **caractérisé en ce que**

   - la vitesse de rotation de rotor est de nouveau augmentée lorsque l'oiseau menacé s'éloigne à nouveau de la zone de danger et se trouve encore dans la zone de réaction.

6. Procédé selon l'une quelconque des revendications précédentes, **caractérisé en ce que**

   - l'éolienne fonctionne à une vitesse de rotation de protection et génère une puissance tant que l'oiseau menacé se trouve dans la zone de danger, dans lequel

- la vitesse de rotation de protection est une vitesse de rotation de rotor qui est considérée comme non dangereuse pour l'oiseau menacé lorsqu'il se trouve dans la zone de danger, et dans lequel en particulier
- la vitesse de rotation de protection est fixée en fonction de l'espèce d'oiseaux identifiée.

7. Procédé selon l'une quelconque des revendications précédentes, **caractérisé en ce que**

- la vitesse de rotation de rotor est réduite à une vitesse ou à la vitesse de rotation de protection qui est considérée comme non dangereuse pour l'oiseau menacé lorsque l'oiseau menacé entre dans une ou la zone de réaction,
- la vitesse de rotation de rotor est réduite à zéro ou à une vitesse de rotation de vrille lorsque l'oiseau menacé entre dans une zone de danger préalable réduite, qui présente une limite de zone qui se situe à l'intérieur de la zone de réaction, mais en dehors de la zone de danger, et
- l'éolienne continue à fonctionner à cette vitesse de rotation de protection, en produisant en particulier de la puissance jusqu'à ce que l'oiseau atteigne la zone de danger préalable, dans lequel en particulier
- la vitesse de rotation de réaction et/ou la vitesse de rotation de protection sont prédéfinies en fonction de l'espèce d'oiseau de l'oiseau menacé.

8. Procédé selon l'une quelconque des revendications précédentes, **caractérisé en ce que**

- l'éolienne, tant qu'elle ne fonctionne pas à la vitesse de rotation nominale et à la puissance nominale, fonctionne selon une courbe caractéristique de fonctionnement dans laquelle une puissance électrique à régler ou un couple de générateur à régler sont prédéfinis en fonction de la vitesse de rotation de rotor, dans lequel
- une courbe caractéristique de normale est utilisée comme courbe caractéristique de fonctionnement si aucun oiseau menacé s'approchant de l'éolienne n'a été identifié, et
- une courbe caractéristique de protection d'oiseaux est utilisée comme courbe caractéristique de fonctionnement, qui présente des valeurs de puissance ou de couple de générateur plus élevées en comparaison avec la courbe caractéristique de normale pour des valeurs respectivement identiques de la vitesse de rotation de rotor, lorsque

- un oiseau menacé s'approchant de l'éolienne a été identifié,
- un oiseau menacé a été identifié dans une zone en dehors d'une ou de la zone de réaction, et/ou lorsque
- il existe une forte probabilité, en particulier supérieure à la moyenne, qu'un oiseau menacé entre dans la zone de réaction, dans lequel de préférence

- la zone de réaction est réglée en fonction de la courbe caractéristique de protection d'oiseaux.

9. Procédé selon l'une quelconque des revendications précédentes, **caractérisé en ce que**

- la vitesse de rotation de rotor lorsqu'un oiseau menacé s'approchant de l'éolienne a été identifié,

- est réduite par l'augmentation du couple de générateur et/ou
- est réduite par l'ajustement des angles de pale des pales de rotor.

10. Procédé selon l'une quelconque des revendications précédentes, **caractérisé en ce que**

- la réduction de la vitesse de rotation de rotor est réglée en fonction

- d'une vitesse de vol détectée de l'oiseau menacé identifié, et/ou
- d'une vitesse de vol typique, en particulier maximale, de l'espèce d'oiseau de l'oiseau menacé identifié, et/ou
- d'une direction de vol détectée de l'oiseau menacé identifié et/ou
- d'un temps d'approche minimum estimé dont l'oiseau menacé identifié a besoin au moins pour atteindre, selon les prévisions, la zone de danger depuis sa position actuelle.

11. Procédé selon l'une quelconque des revendications précédentes, **caractérisé en ce que**

- l'éolienne fonctionne à une vitesse de rotation de sécurité variable, qui désigne une vitesse de rotation, qui s'adapte en permanence à la position actuelle de l'oiseau,

- la vitesse de rotation de sécurité est choisie de telle sorte que la vitesse de rotation de rotor peut être réduite, à partir de la vitesse de rotation de sécurité, à la vitesse de rotation de protection ou à une vitesse de rotation de vrille, dans le temps dont l'oiseau menacé a besoin pour, selon les prévisions, se déplacer depuis sa position actuelle au moins jusqu'à la zone de danger, dans lequel en particulier

- la vitesse de rotation de sécurité est choisie de telle sorte que la réduction de la vitesse de rotation de rotor depuis la vitesse de rotation de sécurité à la vitesse de rotation de protection ou à la vitesse de rotation de vrille est assurée sans freinage d'urgence et avec la poursuite du fonctionnement en production continue de puissance.

**12.** Procédé selon l'une quelconque des revendications précédentes, **caractérisé en ce que**

- la vitesse de rotation de rotor,
- une ou la fonction de vitesse de rotation-distance,
- une ou la vitesse de rotation de protection, et/ou
- une ou la zone de réaction,

sont choisies en fonction d'au moins un critère de la liste présentant

- une visibilité dans les environs de l'éolienne, en particulier dans la zone de réaction de l'éolienne,
- une activité agricole dans les environs de l'éolienne, en particulier dans la zone dans un rayon de 10 km, et en particulier dans un rayon de 5 km par rapport à l'éolienne,
- une énergie thermique dans les environs de l'éolienne, en particulier dans la zone dans un rayon de 10 km, en particulier dans un rayon de 5 km par rapport à l'éolienne,
- une direction de vol préférée de l'oiseau menacé, et
- une position de l'éolienne par rapport à un habitat et/ou une zone de chasse de l'oiseau menacé.

**13.** Procédé selon l'une quelconque des revendications précédentes, **caractérisé en ce que**

- des comportements des oiseaux menacés sont enregistrés pendant le fonctionnement de l'éolienne,
- des modèles de comportement sont déduits à partir des comportements enregistrés, en particulier respectivement pour une espèce d'oiseau identifiée, et
- l'éolienne, en particulier

  - la vitesse de rotation de rotor,
  - une ou la fonction de vitesse de rotation-distance,
  - une ou la vitesse de rotation de protection, et/ou
  - une ou la zone de réaction,

est commandée en fonction du modèle de comportement déduit.

**14.** Procédé selon l'une quelconque des revendications précédentes, **caractérisé en ce que**

- les réductions de la vitesse de rotation de rotor, en particulier par nombre, amplitude et/ou durée, sont enregistrées et
- un calcul de la durée de vie de l'éolienne est effectué ou adapté en fonction des réductions enregistrées.

**15.** Éolienne, qui présente un rotor avec des pales de rotor à angle de pale ajustable et avec un diamètre de rotor, dans laquelle le rotor peut fonctionner à une vitesse de rotation de rotor variable, et une zone, dans laquelle les pales de rotor se déplacent, forme ainsi une zone de danger pour les oiseaux et les chauves-souris, et dans laquelle l'éolienne est prête à exécuter un procédé avec des étapes suivantes :

- de vérification si un oiseau ou une chauve-souris s'approche de l'éolienne en tant qu'oiseau menacé et, si un oiseau menacé a été identifié,
- de détection d'une position d'oiseau comme position actuelle de l'oiseau menacé identifié et
- de commande de la vitesse de rotation de rotor en fonction de la position d'oiseau par rapport à l'éolienne, dans lequel

  - la vitesse de rotation de rotor est réduite par paliers ou en continu à mesure que la distance entre la position d'oiseau et l'éolienne diminue, **caractérisé en ce que**

- la vitesse de rotation de rotor est prédéfinie selon une fonction de vitesse de rotation-distance, dans lequel la fonction de vitesse de rotation-distance désigne une vitesse de rotation en tant que fonction d'une distance entre l'oiseau menacé et la zone de danger.

16. Éolienne selon la revendication 15, **caractérisée en ce que**

- elle présente un dispositif de détection d'oiseaux, pour détecter un oiseau ou une chauve-souris, notamment par position et/ou espèce, et/ou **en ce que**
- l'éolienne, qui présente en particulier un dispositif de commande, est préparée pour exécuter un procédé selon l'une quelconque des revendications 1 à 14.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019220281 B3
- EP 3123025 B1
- EP 2673502 B1
- EP 2017470 A1